# EUROPÄISCHE PATENTSCHRIFT

(11) **EP 3 815 963 B1**
(45) Veröffentlichungstag und Bekanntmachung des Hinweises auf die Patenterteilung: **23.07.2025**
(21) Anmeldenummer: 20203400.5
(22) Anmeldetag: 22.10.2020
(51) Int. Cl.: B60N 2/16, B60N 2/18

(54) **VORRICHTUNG ZUR EINSTELLUNG EINER SITZPOSITION**
DEVICE FOR ADJUSTING A SITTING POSITION
DISPOSITIF DE RÉGLAGE D'UNE POSITION ASSISE

(30) Priorität: 29.10.2019 DE 102019129162
(43) Veröffentlichungstag der Anmeldung: 05.05.2021
(73) Patentinhaber: GRAMMER AG, 92289 Ursensollen (DE)
(72) Erfinder: Haller, Erwin, 92262 Birgland (DE)
(74) Vertreter: Hannke Bittner & Partner mbB Regensburg

(56) Entgegenhaltungen:
- EP-A2- 0 882 619
- US-A- 3 917 211

## Beschreibung

Die Erfindung betrifft eine Vorrichtung zur Einstellung einer Sitzposition für einen Fahrzeugsitz, wobei die Vorrichtung mit zumindest einem Trägerelement für ein Sitzteil und einem Sitzunterbau verbindbar ist.

Derartige Vorrichtungen sind insbesondere für Fahrzeugsitze in Nutzfahrzeugen wie beispielsweise Traktoren, Baumaschinen, Stapler, Lastkraftwagen usw. vorgesehen. Derartige Fahrzeugsitze, insbesondere Fahrersitze, in Nutzfahrzeugen müssen besonderen Bedingungen hinsichtlich der Sitzergonomie genügen, da die Insassen, beziehungsweise Fahrer in der Regel lange Zeiten in diesen verbringen müssen. Dabei ist es erwünscht, dass der Fahrzeugsitz hinsichtlich verschiedener Sitzpositionen optimal eingestellt werden kann. Ferner ist zu berücksichtigen, dass der Fahrzeugsitz von Insassen unterschiedlicher Größe benutzt werden und demnach entsprechend angepasst werden müssen. Eine solche Vielzahl an Einstellungsmöglichkeiten des Fahrzeugsitzes verursacht oft eine unerwünschte Komplexität des Fahrzeugsitzes.

Entsprechend der Körpergröße des Fahrers muss der Fahrersitz entlang der Höhenrichtung Z und entlang der Längsrichtung X eingestellt werden, um den Fahrer die optimale Sitzhöhe und den optimalen Abstand zur Pedalerie zu ermöglichen. Ferner erfolgt in der Regel eine Einstellung der Neigung des Sitzteils. Ein größerer Fahrer sitzt dabei bevorzugt entlang der Höhenachse Z weiter oben und entlang der Längsachse X weiter hinten als ein kleinerer Fahrer. Ferner bevorzugen größere Fahrer eine Neigung des Sitzteils nach hinten. Bei einer solchen Neigung ist ein vorderer Rand des Sitzteils entlang der Höhenachse Z nach oben geschwenkt. Gängige Fahrersitze mit aufrechter Sitzposition bieten in der Regel die Möglichkeit die Sitzhöhenposition einzustellen. Eine solche Einstellung erfolgt in den meisten Anwendungsfällen durch eine Verlagerung des Sitzes nahezu senkrecht in vertikaler Richtung. Nach Einstellung der Sitzhöhe muss in einem weiteren Schritt die Neigung des Sitzteils und gegebenenfalls die Sitzposition in Längsrichtung X angepasst werden. Ist ein häufiger Fahrerwechsel notwendig, kann eine solche Prozedur als umständlich empfunden werden.

Eine gattungsgemässe Vorrichtung zur Einstellung einer Sitzposition für einen Fahrzeugsitz ist aus der EP0882619A2 bekannt.

Aufgabe der vorliegenden Erfindung ist es einen Fahrzeugsitz bereitzustellen, welcher die eingangs genannten Problematiken löst.

Die Aufgabe wird gelöst von einer Vorrichtung zur Einstellung einer Sitzposition für einen Fahrzeugsitz, welche zumindest ein Trägerelement für ein Sitzteil umfasst und mit einem Sitzunterbau verbindbar ist, wobei die Vorrichtung zumindest einen ersten Schenkel und zumindest einen zweiten Schenkel umfasst, wobei der erste Schenkel drehbar um eine dritte Drehachse und der zweite Schenkel drehbar um eine vierte Drehachse am Sitzunterbau und drehbar am zumindest einem Trägerelement anordenbar sind, wobei ein erster Winkel α zwischen dem ersten Schenkel und dem Trägerelement durch eine Winkeleinstelleinrichtung einstellbar ist, wobei der zumindest eine erste Schenkel und der zumindest eine zweite Schenkel jeweils einen Hebelabschnitt aufweisen, welche mechanisch gekoppelt sind und wobei der zumindest eine erste Schenkel entlang einer Längsachse hinter dem zumindest einem zweiten Schenkel angeordnet ist, wobei eine Änderung des Winkels α eine Verlagerung des zumindest einen Trägerelements entlang einer Höhenachse Z und eine Änderung eines Neigungswinkels θ des Trägerelements verursacht, wobei der Neigungswinkel θ sich zwischen einer Mittelachse des zumindest einen Trägerelements und einer Referenzachse, welche im Wesentlichen parallel zu der Längsachse ist, erstreckt, wobei die Änderung des Neigungswinkels θ durch unterschiedliche Längen der Hebelabschnitte der Schenkel bedingt ist, wobei bei einer Einstellung des Winkels α sich der zumindest eine erste Schenkel um die dritte Drehachse dreht und durch die mechanische Kopplung eine Drehung des zumindest einen zweiten Schenkels um die vierte Drehachse verursacht wird, wobei der zumindest eine zweite Schenkel indirekt mit dem zumindest einen Trägerelement verbunden ist, wobei der zumindest eine zweite Schenkel über ein Beabstandungselement mit dem Trägerelement verbunden ist, wobei das Beabstandungselement um eine Drehachse relativ zu dem zumindest einen zweiten Schenkel drehbar ist, wobei das Beabstandungselement um eine weitere Drehachse relativ zu dem Trägerelement drehbar ist..

Die erfindungsgemäße Vorrichtung ermöglicht eine einfache Einstellung der Sitzhöhe und zugleich der Neigung der Sitzfläche. Die Sitzfläche ist die oberste Fläche des Sitzteils, auf welcher der Insasse Platz nimmt. Für einige Insassen ist es angenehmer, wenn die Sitzfläche nicht genau horizontal, sondern leicht nach vorne geneigt ist. Andere Insassen bevorzugen eine Neigung der Sitzfläche nach hinten. In ergonomischer Hinsicht sollte die Sitzfläche so stark geneigt sein, dass die Oberschenkel leicht und ohne Druck auf dem Sitzteil aufliegen. Je mehr der Oberschenkel abgestützt wird, desto besser verteilt sich der Sitzdruck. Vor allem auf langen Strecken führt dies zu einer spürbaren Entlastung. Die erfindungsgemäße Vorrichtung ermöglicht demnach eine simultane Einstellung zweier ergonomisch relevanter Sitzparameter, nämlich der Sitzhöhe und der Neigung der Sitzfläche. Ferner ist die Vorrichtung konstruktiv äußerst einfach gestaltet und somit kostengünstig herzustellen.

Die Vorrichtung, beziehungsweise der Fahrzeugsitz, erstrecken sich entlang einer Höhenachse Z. Eine Verlagerung entlang der Höhenachse Z kann dabei nach unten, also in Richtung des Fahrzeugbodens oder nach oben erfolgen. Die Vorrichtung, beziehungsweise der Fahrzeugsitz, erstrecken sich ebenso entlang einer Längsachse X. Eine Verlagerung entlang der Längsachse X kann dabei nach vorne, also in Richtung zu der Pedalerie oder nach hinten erfolgen. Schließlich erstrecken sich die Vorrichtung, beziehungsweise der Fahrzeugsitz, entlang einer Breitenachse Y.

Der im Folgenden verwendet Ausdruck "im Wesentlichen" soll dahingehend auszulegen sein, dass auch geringfügige Toleranzabweichungen mit beansprucht werden. So kann die Abweichung einen Winkel von bevorzugt kleiner 10°, weiter bevorzugt kleiner 7,5°, noch weiter bevorzugt kleiner 5° betragen.

Nach einer bevorzugten Ausführungsform umfasst die mechanische Kopplung ein Verbindungselement, welches die Hebelabschnitte der Schenkel verbindet. Erfindungsgemäß ist die Änderung des Neigungswinkels θ durch eine unterschiedliche Länge der Hebelabschnitte des zumindest einen ersten Schenkels und des zumindest einen zweiten Schenkels bedingt. Alternativ ist die Änderung des Neigungswinkels θ ist durch die unterschiedlichen Länge der Hebelabschnitte des zumindest einen ersten Schenkels und des zumindest einen zweiten Schenkels bedingt und durch eine Modifikation der Länge des Verbindungselements verursacht. Die Neigung des Sitzteils wird demnach vorteilhafterweise durch die mechanische Kopplung der beiden Schenkel und die unterschiedliche Länge des Hebelabschnitts der beiden Schenkel ermöglicht. Vorzugsweise weist der Hebelabschnitt des zumindest einen zweiten Schenkels eine größere Länge auf, als der Hebelabschnitt des zumindest einen ersten Schenkels. Weiterhin kann ein Verbindungselement vorgesehen sein, welche in seiner Länge modifizierbar ist. Durch die vorteilhafte Modifikation des Abstands zwischen den Hebelabschnitten kann eine weitere Änderung des Neigungswinkels θ ermöglicht werden. Weisen beiden Hebelabschnitte der Schenkel die gleiche Länge auf, bleibt durch eine Änderung des Winkels α der Neigungswinkel θ unverändert. Das Sitzteil würde demnach bevorzugt horizontal ausgerichtet entlang der Höhenachse Z verlagert. Die Änderung des Neigungswinkel θ erfolgt in einem solchen Fall durch eine vorteilhafte Modifikation der Länge des Verbindungselements. In diesem Fall ist die Änderung des Neigungswinkels θ vorzugsweise proportional zu der Änderung der Länge des Verbindungselements.

Erfindungsgemäß erstreckt sich der Neigungswinkel θ zwischen einer Mittelachse des zumindest einen Trägerelements und einer Referenzachse, welche im Wesentlichen parallel zu einer Längsachse X der Vorrichtung ist. Demnach ist das zumindest eine Trägerelement in einer ersten Ebene angeordnet, welche die Mittelachse umfasst. Die Sitzfläche des Sitzteils ist vorteilhafterweise im Wesentlichen parallel zu der ersten Ebene angeordnet. Die Referenzachse ist in einer Referenzebene umfasst, welche durch die Längsachse X und die Breitenachse Y aufgespannt wird. Vorzugsweise ist die Referenzebene im Wesentlichen parallel zu einem Karosserieboden. Das Sitzteil weist vorzugsweise einen hinteren Bereich auf, welcher an einer vorteilhaften Rückenlehne anliegt. Entlang der Längsachse X gegenüberliegend, weist das Sitzteil einen vorderen Bereich auf, welcher bei einer Ausführungsform als Fahrersitz vorzugsweise zu der Pedalerie hin ausgerichtet ist. Dementsprechend können auch ein vorderer und ein hinterer Bereich des Trägerelements definiert werden. Bei einer horizontalen Ausrichtung des zumindest einen Trägerelementes beziehungsweise der Sitzfläche beträgt der Neigungswinkel θ im Wesentlichen 0°. Vorteilhafterweise ist bei einem Neigungswinkel θ größer als 0° ein vorderer Bereich des Trägerelements, beziehungsweise ein vorderer Bereich des Sitzteils entlang der Höhenrichtung Z nach oben geschwenkt. Bevorzugt ist bei einem Neigungswinkel θ kleiner als 0° ein vorderer Bereich des Trägerelements, beziehungsweise ein vorderer Bereich des Sitzteils entlang der Höhenrichtung Z nach unten geschwenkt. Bei einer vorteilhaften Neigung nach hinten würde demnach der Winkel θ positive Werte annehmen. Bei einer vorteilhaften Neigung nach vorne würde demnach der Neigungswinkel θ negative Werte annehmen. Der Neigungswinkel θ kann vorzugsweise in einem Bereich zwischen -60° und +60°, vorzugsweise in einem Bereich zwischen - 45° und +45°, weiter bevorzugt in einem Bereich zwischen -30° und +30° eingestellt werden.

Nach einer weiteren vorteilhaften Ausführungsform verursacht eine Änderung des Winkels α eine Verlagerung des zumindest einen Trägerelements entlang einer Höhenachse Z und zugleich entlang einer Längsachse X sowie eine Änderung eines Neigungswinkels θ des Trägerelements. Es werden demnach vorteilhafterweise drei ergonomisch relevante Sitzparameter durch eine Änderung des Winkles α verändert. Dies sind die Sitzhöhe, die Sitzposition in Längsrichtung X, beziehungsweise der Abstand zu der Pedalerie und dem Lenkrad und die Neigung des Sitzteils. Vorzugsweise verursacht eine Änderung des Winkels α, welche eine Verlagerung des zumindest einen Trägerelements entlang der Höhenachse Z nach unten verursacht, zugleich eine Verlagerung des zumindest einen Trägerelements entlang der Längsachse X nach vorne und eine Änderung des Neigungswinkels θ in negativer Richtung. Eine Änderung des Winkels α, welche eine Verlagerung des zumindest einen Trägerelements entlang der Höhenachse Z nach oben verursacht, verursacht vorteilhafterweise zugleich eine Verlagerung des zumindest einen Trägerelements entlang der Längsachse X nach hinten und eine Änderung des Neigungswinkels θ in positiver Richtung. Bei einer Änderung des Neigungswinkels θ in positiver Richtung wird ein positiver Winkelwert größer und ein negativer Winkelwert kleiner. Man spricht auch von einer Änderung der Neigung des Sitzteils nach hinten. Bei einer Änderung des Neigungswinkels θ in negativer Richtung wird ein positiver Winkelwert kleiner und ein negativer Winkelwert größer. Man spricht auch von einer Änderung der Neigung des Sitzteils nach vorne.

Durch eine solche synchronisierte Verstellung der Sitzpositionen bezüglich der Höhe des Abstands zu der Pedalerie und der Neigung des Sitzteils erfolgt eine schnelle ergonomische Anpassung der Sitzposition für kleine und große Fahrer. In der Regel benötigen kleine Fahrer niedrigere Sitzhöhen und müssen zugleich entlang der Längsachse X weiter vorne sitzen. Im Gegensatz dazu müssen sich große Fahrer entlang der Höhenachse Z weiter oben und entlang der Längsachse X weiter hinten platzieren. Es wird eine äußerst schnelle und einfache Anpassung der Sitzposition ermöglicht. Zur Anpassung der Sitzposition bezüglich der drei Sitzparameter muss demnach nur die vorteilhafte Winkeleinstelleinrichtung betätigt werden. Vorteilhafterweise wird der Winkel α durch die Winkeleinstelleinrichtung gehalten bis diese wieder betätigt wird. Die Winkeleinstelleinrichtung kann demnach auch als Winkelfeststelleinrichtung betrachtet werden.

Erfindungsgemäß ist der zumindest eine erste Schenkel entlang der Längsachse X hinter dem zumindest einem zweiten Schenkel angeordnet. Dabei ist es von Vorteil, dass der zumindest eine erste Schenkel entlang der Längsachse X mit dem zumindest einen zweiten Schenkel mittels einer ersten Längsverbindung verbunden ist. Vorteilhafterweise ist die erste Längsverbindung durch das zumindest eine Trägerelement oder durch das Sitzteil realisiert. Ferner ist es von Vorteil, dass der zumindest eine erste Schenkel und der zumindest eine zweite Schenkel entlang der Längsachse X mittels einer zweiten Längsverbindung verbunden sind. Vorzugsweise ist die zweite Längsverbindung durch den Sitzunterbau realisiert. Vorzugsweise umfasst die mechanische Kopplung die erste und die zweite Längsverbindung. Vorteilhafterweise sind die erste und Längsverbindung starre Verbindungen und somit nicht in Ihrer Länge veränderbar. Nach einer weiteren bevorzugten Ausführungsform weisen der zumindest eine erste Schenkel und der zumindest eine zweite Schenkel jeweils einen ersten Abschnitt und den Hebelabschnitt, beziehungsweise zweiten Abschnitt auf. Vorzugsweise schließen der erste Abschnitt und der Hebelabschnitt einen Winkel β ein. Vorteilhafterweise sind hierdurch der zumindest eine erste Schenkel und der zumindest eine zweite Schenkel im Wesentlichen L-förmig ausgestaltet. Vorzugsweise ist zwischen dem ersten Abschnitt und dem Hebelabschnitt ein Knickbereich vorgesehen.

Nach einer weiteren bevorzugten Ausführungsform sind der zumindest eine erste Schenkel und der zumindest eine zweite Schenkel um jeweils eine Drehachse relativ zu dem Trägerelement drehbar gelagert. Vorteilhafterweise sind der zumindest eine erste Schenkel und der zumindest eine zweite Schenkel um jeweils eine weitere Drehachse relativ zu dem Sitzunterbau drehbar gelagert. Vorzugsweise ist in einem oberen Endbereich des ersten Abschnitts die Drehachse bezüglich der Drehung relativ zu dem Trägerelement angeordnet. Bevorzugt ist die Drehachse bezüglich der Drehung relativ zu dem Sitzunterbau in dem Knickbereich angeordnet.

Vorzugsweise ist eine dritte Längsverbindung entlang der Längsachse X zwischen dem Hebelabschnitt des zumindest einen ersten Schenkel und dem Hebelabschnitt des zumindest einen zweiten Schenkels durch das Verbindungselement realisiert. Vorteilhafterweise umfasst die mechanische Kopplung die dritte Längsverbindung, welche vorzugsweise in Ihrer Länge modifizierbar ist. Denkbar wäre jedoch auch, dass die dritte Längsverbindung eine starre Verbindung ist. Vorzugsweise ist der jeweilige Hebelabschnitt um eine Drehachse relativ zu dem Verbindungselement drehbar. Vorteilhafterweise ist die Drehachse bezüglich einer Drehung des zumindest einen ersten oder des zumindest einen zweiten Schenkels relativ zu dem Verbindungselement in einem unteren Endbereich des jeweiligen Hebelabschnitts angeordnet.

Erfindungsgemäß ist der zumindest eine zweite Schenkel indirekt mit dem zumindest einen Trägerelement verbunden. Dabei ist zumindest der eine zweite Schenkel über ein Beabstandungselement, beispielsweise ein Pleuel, mit dem zumindest einem Trägerelement verbunden. Es sind somit vorteilhafterweise zwei Drehachsen bezüglich einer Drehung des zweiten Schenkels relativ zu dem Trägerelement vorgesehen Erfindungsgemäß ist das Beabstandungselement um eine Drehachse relativ zum zumindest einen zweiten Schenkel drehbar und um eine weitere Drehachse relativ zum Trägerelement drehbar. Diese beiden Drehachsen sind vorzugsweise entlang der Höhenachse Z übereinander angeordnet, beziehungsweise beabstandet. Vorteilhafterweise ist das Beabstandungselement, beziehungsweise Pleuel um eine Drehachse relativ zu dem zumindest einen zweiten Schenkel drehbar. Hierdurch ergibt sich ein vorteilhafter weiterer Freiheitsgrad, welcher zu der Einstellung einer Neigung des Sitzteil verwendbar ist.

Erfindungsgemäß wird durch eine Einstellung des Winkels α demnach die Ausrichtung des zumindest einen ersten Schenkels verändert. Demnach wird der erste Schenkel um eine entsprechende Drehrichtung gedreht, beziehungsweise rotiert. Durch die mechanische Kopplung zwischen dem zumindest einen ersten Schenkel und dem zumindest einen zweiten Schenkel wird die Drehung des zumindest einen ersten Schenkels auf den zumindest einen zweiten Schenkel übertragen. Demnach bewegt, beziehungswese dreht sich der zumindest eine zweite Schenkel analog zu dem zumindest einen ersten Schenkel. Aus der Bewegung der Gesamtheit des zumindest einen ersten Schenkels und des zumindest einen zweiten Schenkels resultiert vorteilhafterweise die Verlagerung des zumindest einen Trägerelements, beziehungsweise des Sitzteils. Durch die vorteilhafte Ausgestaltung, in welcher der Hebelabschnitts des zumindest einen zweiten Schenkels eine größere Länge als der Hebelabschnitt des ersten Schenkels aufweist, unterscheidet sich die Drehung des zumindest einen zweiten Schenkels von der Drehung des zumindest einen ersten Schenkels. Dieser Unterschied ist vorteilhafterweise abhängig von dem Verhältnis der Längen der Hebelabschnitte des zumindest einen ersten und des zumindest einen zweiten Schenkels. Vorteilhafterweise verursacht dieser Unterschied eine Drehung des Beabstandungselementes und eine unterschiedliche Verlagerung entlang der Höhenachse Z des vorderen Bereichs relativ zu dem hinteren Bereich des zumindest einen Trägerelements, beziehungsweise Sitzteils, wodurch eine Änderung des Neigungswinkels θ verursacht wird. Die Winkeleinstelleinrichtung kann vorteilhafterweise lediglich auf den zumindest einen ersten Schenkel direkt einwirken. Vorzugsweise wirkt die Winkeleinstelleinrichtung durch die genannte mechanische Kopplung indirekt auch auf den zumindest einen zweiten Schenkel.

Vorteilhafterweise erstreckt sich der Winkel α zwischen einer Mittelachse des ersten Schenkels 6 und einer fiktiven Bezugslinie des Trägerelements, welche im Wesentlichen senkrecht zu dem Sitzteil verläuft. Der Winkel α liegt in einem Bereich zwischen 0° und 140°. Bevorzugt liegt der Winkel α in einem Bereich zwischen 0° und 120°. Weiter bevorzugt liegt der Winkel α in einem Bereich zwischen 0°und 90°. Vorteilhafterweise sind ist die Änderung der Sitzposition entlang der Höhenachse Z und entlang der Längsachse X proportional zu einer Änderung des Winkles α.

Vorzugsweise ist ein Bedienelement vorgesehen, mittels welchem die Winkeleinstelleinrichtung bedient werden kann. Zur Anpassung der Sitzposition muss demnach nur eine Bedieneinrichtung betätigt werden. Vorzugsweise kann der Fahrzeugsitz noch zumindest eine zusätzliche Einstelleinrichtung für die Sitzposition entlang der Längsachse X aufweisen, mittels welcher eine zusätzliche Einstellung der Sitzposition ermöglicht wird. Hierdurch wird eine individuelle Einstellung der Sitzposition ermöglicht.

Nach einer besonders bevorzugten Ausführungsform ist das Verbindungselement dazu geeignet und dafür vorgesehen dessen modifizierbare Länge zu halten, vorzugsweise bis eine erneute Modifikation durchgeführt wird. Dies bedeutet, dass die Länge des Verbindungselements einstellbar ist und die eingestellte Länge durch das Verbindungselement dann gehalten wird, bis eine erneute Einstellung erfolgt. Vorteilhafterweise ist das Verbindungselement mittels einer Bedien- und Steuereinrichtung ansteuerbar. Dabei ist es von Vorteil, dass die Bedien- und Steuereinrichtung eine Speichereinrichtung umfasst, mittels welcher bestimmte Längenwerte des Verbindungselements speicherbar sind. Da die bestimmten Längenwerte bestimmten Neigungswinkeln θ entsprechen können, somit bevorzugte Neigungseinstellungen gespeichert werden und durch den Nutzer entsprechend ausgewählt werden. Vorteilhafterweise ist die Länge des Verbindungselements kontinuierlich einstellbar.

Nach einer bevorzugten Ausführungsform ist das Verbindungselement eine blockierbare Gasfeder. Nach einer weiteren vorteilhaften Ausführungsform ist das Verbindungselement ein Stellelement. Vorzugsweise umfasst das Stellelement ein Spindelhubgetriebe. Diese Spindelhubgetriebe wird durch einen entsprechenden vorteilhaften Stellantrieb, der vorzugsweise ein Elektromotor sein kann, angetrieben.

Nach einer weiteren bevorzugten Ausführungsform verursacht die Modifikation der Länge des Verbindungselements eine Drehung des zumindest einen zweiten Schenkels um zumindest die Drehachse bezüglich einer Drehung relativ zu dem Verbindungselement und um die Drehachse bezüglich einer Drehung relativ zu dem Sitzunterbau. Vorteilhafterweise verursacht die Modifikation der Länge des Verbindungselements eine Drehung des zumindest einen zweiten Schenkels um die Drehachse bezügliche einer Drehung relativ zu dem Trägerelement. Vorteilhafterweise ist bei einer Modifikation der Länge des Verbindungselements der Winkel α festgelegt. Dies kann bevorzugt durch die Winkeleinstelleinrichtung oder dem Festlegungselement erfolgen. Vorteilhafterweise verursacht die Modifikation der Länge des Verbindungselements keine Drehung des zumindest einen ersten Schenkels. Bevorzugt verursacht eine Drehung des zweiten Schenkels die Änderung des Neigungswinkels θ.

Nach einer weiteren bevorzugten Ausführungsform weisen der erste Abschnitt des zumindest einen ersten Schenkels und der erste Abschnitt des zumindest einen zweiten Schenkels eine gleiche Länge auf. Vorzugsweise liegen die Drehachsen bezüglich der Drehung relativ zu dem Trägerelement des zumindest einen ersten Schenkels und des zumindest einen zweiten Schenkels auf einer ersten fiktiven oder realen Verbindungslinie. Weiterhin ist es bevorzugt, dass die Drehachsen bezüglich der Drehung relativ zu dem Sitzunterbau des zumindest einen ersten Schenkels und des zumindest einen zweiten Schenkels auf einer zweiten fiktiven oder realen Verbindungslinie liegen. Vorteilhafterweise bilden die erste Verbindungslinie, die zweite Verbindungslinie und die ersten Abschnitte des zumindest einen ersten Schenkels und des zumindest einen zweiten Schenkels ein Trapez. Ein solche Trapezform begünstigt die gleichzeitige Verlagerung der Sitzfläche entlang der Höhenachse Z und der Längsachse X. Das Trapez kann ein Parallelogramm sein, wenn die ersten Abschnitte jeweils eine gleiche Länge aufweisen und weiterhin die erste und die zweite Verbindungslinie die gleiche Länge aufweisen.

Die Verbindungslinien, welche das vorteilhafte Trapez, beziehungsweise Parallelogramm bilden, können demnach reale Verbindungslinien sein, d. h. die Verbindungslinie ist von einem entsprechenden Element, beispielsweise dem Sitzunterbau oder dem Trägerelement umfasst. Denkbar wäre jedoch auch, dass zwar Verbindungen zwischen den Schenkel existieren, diese jedoch nicht direkte Verbindungen zwischen den Drehachsen darstellen. Demnach könnten beispielsweise die eigentlichen Verbindungen zwischen den Drehachsen entlang der Höhenachse Z über oder unter der fiktiven Verbindungslinie liegen.

Nach einer weiteren bevorzugten Ausführungsform weisen der Hebelabschnitt des zumindest einen ersten Schenkels und der Hebelabschnitt des zumindest einen zweiten Schenkels unterschiedliche Längen auf. Vorzugsweise liegen die Drehachsen bezüglich der Drehung des zumindest einen ersten Schenkels und des zumindest einen zweiten Schenkels relativ zu dem Verbindungselement auf einer dritten fiktiven oder realen Verbindungslinie. Dabei ist es bevorzugt, dass die zweite Verbindungslinie, die dritte Verbindungslinie und die zweiten Abschnitte des zumindest einen ersten Schenkels und des zumindest einen zweiten Schenkels ein (allgemeines) Viereck bilden. Bei einer Ausführungsform, in welcher der Hebelabschnitt des zumindest einen ersten Schenkels und der Hebelabschnitt des zumindest einen zweiten Schenkels gleiche Längen aufweisen, wäre das Viereck ein zweites Trapez, beziehungsweise ein Parallelogramm, wenn weiterhin die zweite und die dritte Verbindungslinie die gleiche Länge aufweisen. Durch eine Änderung der Länge des Verbindungselements, ändern sich vorteilhafterweise sowohl das erste Trapez als auch das zweite Trapez.

Vorteilhafterweise kann eine Neigungsänderung bei einer Änderung der Sitzposition entlang der Höhenachse Z und entlang der Längsachse X bei der beschriebenen Ausführungsform, in welcher die Anordnung der Schenkel ein allgemeines Viereck beschreibt, durch eine Modifikation der Länge des Verbindungselements ausgeglichen werden, so dass das Trägerelement, beziehungsweise die Sitzfläche im Wesentlichen waagrecht, beziehungsweise parallel zu dem Karosserieboden ausgerichtet sind. Dies kann bevorzugt automatisch erfolgen. Hierzu kann die Bedien- und Steuereinrichtung mit entsprechenden Sensoren verbunden sein, welche eine entsprechende Änderung der Sitzposition feststellen. Die Bedien- und Steuereinrichtung kann dann die notwendige Modifikation der Länge des Verbindungselements berechnen und das Verbindungselement entsprechend ansteuern.

Nach einer weiteren bevorzugten Ausführungsform sind zwei erste Schenkel und zwei zweite Schenkel vorgesehen. Vorzugsweise sind die beiden ersten Schenkel entlang der Breitenachse Y voneinander beabstandet. Bevorzugt sind die beiden ersten Schenkel um die gleichen Drehachsen drehbar. Vorteilhafterweise sind die beiden zweiten Schenkel entlang der Breitenachse Y voneinander beabstandet. Bevorzugt sind beide zweiten Schenkel um gleiche Drehachsen drehbar.

Die genannten Drehachsen, um welche die Paare der ersten Schenkel, beziehungsweise der zweiten Schenkel jeweils drehbar sind, können vorzugsweise Achsen sein, welche in einer entsprechenden Drehlagerung der Schenkel gelagert sind. Dabei kann die jeweilige Drehachse eine durchgängige reale Achse sein, welche in der entsprechenden Drehlagerung der Schenkel gelagert ist. Die Drehachse kann auch eine durchgängige fiktive Achse sein, welche sich durch entsprechende Drehlagerungen der beiden Schenkel erstreckt.

Vorzugsweise sind die entlang der Breitenachse Y sich gegenüberliegenden Schenkel mittels zumindest einer Querverbindung verbunden. Diese Querverbindungen können vorteilhafterweise durch das Trägerelement oder durch das Sitzteil realisiert werden. Denkbar wäre jedoch auch, dass die Querverbindungen durch anderweitige Verstrebungen Stangen etc. realisiert werden.

Nach einer weiteren bevorzugten Ausführungsform muss zumindest das eine Trägerelement ein plattenartiges Element sein, welches sich entlang der Langsachse X und der Breitenachse Y erstreckt. Vorzugsweise sind an diesem plattenartigen Element unterseitig die ersten und die zweiten Schenkel angeordnet. Demnach ist die erste, beziehungsweise sind die ersten Längsverbindung(en) durch das plattenartige Element realisiert. Vorteilhafterweise ist oberseitig auf dem plattenartigen Element das Sitzteil angeordnet. Es wäre jedoch auch denkbar, dass mehrere Trägerelemente vorgesehen sind. Die jeweiligen Querverbindungen und die ersten Längsverbindungen würden dann vorteilhafterweise durch das Sitzteil realisiert.

Nach einer weiteren bevorzugten Ausführungsform umfasst die Winkeleinstelleinrichtung eine Feststelleinrichtung, welche einen eingestellten Winkel α feststellt. Durch die Feststelleinrichtung wird demnach vorzugsweise die Ausrichtung des zumindest einen ersten Schenkels relativ zu dem Trägerelement, beziehungsweise relativ zu dem Sitzunterbau festgelegt und gehalten. Ebenso wird durch die mechanische Kopplung zwischen dem zumindest einen ersten und dem zumindest einen zweiten Schenkel die Ausrichtung des zumindest einen zweiten Schenkels relativ zu dem Trägerelement, beziehungsweise relativ zu dem Sitzunterbau festgelegt und gehalten. Eine solche Feststelleinrichtung kann vorzugsweise ein sogenannter "Recliner" sein. Vorteilhafterweise umfasst die Winkeleinstelleinrichtung einen Antrieb, mittels welchem die Feststelleinrichtung angetrieben wird, um den Winkel α zu verändern. Die Winkeleinstelleinrichtung ist vorzugsweise eine elektrisch ansteuerbare Getriebeeinheit. Vorzugsweise umfasst die Winkeleinstelleinrichtung eine Steuereinheit, welche den Antrieb ansteuert. Dabei ist es von Vorteil, dass in der Steuereinheit bestimmte Sitzposition speicherbar sind. Der Nutzer kann dann zwischen den gespeicherten Positionen wechseln. Vorzugsweise ist eine Bedieneinrichtung vorgesehen, mittels welcher der Nutzer entsprechende Eingaben machen kann.

Nach einer weiteren bevorzugten Ausführungsform ist die Vorrichtung ein modulares Bauelement ist. Demnach ist die Vorrichtung zur Einstellung einer Sitzposition für einen Fahrzeugsitz vorteilhafterweise nicht in andere Baukomponenten eines Fahrzeugsitzes integriert. Vorteilhafterweise kann die Vorrichtung zwischen dem Sitzunterbau und dem Sitzteil angeordnet werden. Es müssen nur entsprechende Befestigungselemente bereitgestellt werden, beziehungsweise vorgesehen sein. Hierdurch kann der Aufbau des Sitzunterbaus vereinfacht werden. Eine vorteilhafte Vertikalfederung, welche durch den modularen Aufbau von der Vorrichtung unabhängig ist, könnte somit auf ihre Hauptaufgabe, der Isolation der Schwingungen und den Erhalt des Höhenniveaus reduziert werden. Durch die modulare Ausgestaltung der Vorrichtung wird es auch ermöglicht, bereits vorhandene Fahrzeugsitze auf einfachste Art und Weise mit dieser Vorrichtung nachzurüsten.

Die vorliegende Aufgabe wird ebenso gelöst von einem Fahrzeugsitz mit einer Vorrichtung nach einer der beschriebenen Ausführungsformen.

Der Fahrzeugsitz kann dabei mit allen bereits obig im Rahmen der Vorrichtung zur Einstellung einer Sitzposition für einen Fahrzeugsitz beschriebenen Merkmalen einzeln oder in Kombination miteinander ausgestattet sein und umgekehrt.

Der Fahrzeugsitz kann vorteilhafterweise ein Scherengestell umfassen, mittels welchem der Fahrzeugsitz an dem Fahrzeug, beziehungsweise dem Karosserieboden befestigt ist. Ferner ist es von Vorteil, dass der Fahrzeugsitz eine Feder und/oder Dämpfungseinrichtung zur Federung/ Dämpfung von vertikalen und/oder horizontalen Schwingungen umfasst. Aufgrund des bereits beschriebenen bevorzugten modularen Aufbaus kann der Sitzunterbau einfacher ausgestaltet werden.

Der Fahrzeugsitz kann nach einer weiteren Ausführungsform eine Einrichtung zur Einstellung der Sitzposition entlang der Längsachse X umfassen. Dies kann beispielsweise ein Schienensystem an dem Karosserieboden sein, auf welchem der Sitzunterbau verlagerbar angeordnet ist.

Ferner ist es bevorzugt, wenn der Fahrzeugsitz eine Einrichtung zur Einstellung der Neigung des Sitzteils umfasst.

Der Fahrzeugsitz kann dabei als Fahrersitz oder als Beifahrersitz ausgestaltet sein.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig.1a, 1b: eine seitliche Ansicht des Fahrzeugsitzes nach einer Ausführungsform;
- Fig.2a bis 2c: eine Ansicht des Fahrzeugsitzes nach einer Ausführungsform in verschiedenen Sitzpositionen;
- Fig.3a bis 3c: eine Ansicht des Fahrzeugsitzes nach einer Ausführungsform in verschiedenen Sitzpositionen;
- Fig.4a bis 4d: eine Ansicht des Fahrzeugsitzes nach einer Ausführungsform in verschiedenen Sitzpositionen;
- Fig.5a bis 5c: eine Ansicht des Fahrzeugsitzes nach einer Ausführungsform in verschiedenen Sitzpositionen;
- Fig. 6: Detailansicht umfassend die erste Drehasche;
- Fig. 7: Verstellkurve des Fahrzeugsitzes;
- Fig.8: isometrische Ansicht der Vorrichtung zur Einstellung einer Sitzposition;
- Fig.9: isometrische Ansicht der Vorrichtung zur Einstellung einer Sitzposition;
- Fig.10: seitliche Ansicht der Vorrichtung zur Einstellung einer Sitzposition;
- Fig.11: Draufsicht der Vorrichtung zur Einstellung einer Sitzposition;
- Fig.12: seitliche Ansicht der Vorrichtung zur Einstellung einer Sitzposition;
- Fig.13: seitliche Ansicht der Vorrichtung zur Einstellung einer Sitzposition;
- Fig.14: Draufsicht der Vorrichtung zur Einstellung einer Sitzposition;
- Fig.15a bis 15c: seitliche Ansicht der Vorrichtung zur Einstellung einer Sitzposition in verschiedenen Neigungspositionen.

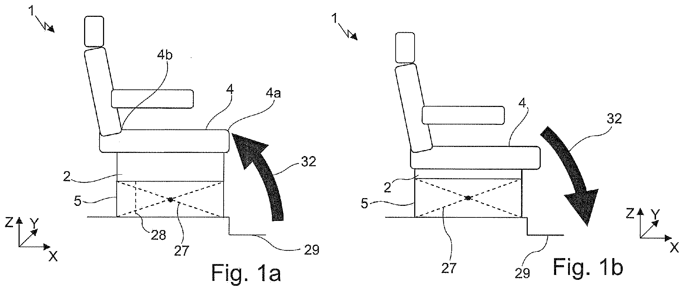

In den Figuren 1 bis 15c ist eine Vorrichtung 2 zur Einstellung einer Sitzposition für einen Fahrzeugsitz 1 gezeigt. Die Vorrichtung 2 umfasst zumindest ein Trägerelement 3 für ein Sitzteil 4 und ist mit einem Sitzunterbau 5 verbindbar. Die Vorrichtung 2 umfasst weiterhin zumindest einen ersten Schenkel 6 und zumindest einen zweiten Schenkel 7, wobei die Schenkel 6, 7 drehbar an dem Sitzunterbau 5 und dem zumindest einem Trägerelement 3 anordenbar sind, wobei ein erster Winkel α zwischen dem ersten Schenkel 6 und dem Trägerelement 3 durch eine Winkeleinstelleinrichtung 8 einstellbar ist, wobei der zumindest eine erste Schenkel 6 und der zumindest eine zweite Schenkel 7 jeweils einen Hebelabschnitt 6b, 7b aufweisen, welche mechanisch gekoppelt sind, wobei eine Änderung des Winkels α eine Verlagerung des zumindest einen Trägerelements 3 entlang einer Höhenachse Z und eine Änderung eines Neigungswinkels θ des Trägerelements 3 verursacht.

Die mechanische Kopplung umfasst, ein Verbindungselement 19, welches die Hebelabschnitte 6b, 7b der Schenkel 6, 7 verbindet. Die Änderung des Neigungswinkels θ ist durch eine unterschiedliche Länge der Hebelabschnitte 6b, 7b des zumindest einen ersten Schenkels und des zumindest einen zweiten Schenkels 7 bedingt. Der Hebelabschnitt 7b des zumindest einen zweiten Schenkels 7 weist dabei eine größere Länge auf als der Hebelabschnitt 6b des zumindest einen ersten Schenkels 6. Alternativ oder kumulativ kann die Änderung des Neigungswinkels θ durch eine Modifikation der Länge des Verbindungselements 19 verursacht sein.

Der Fahrzeugsitz, beziehungsweise die Vorrichtung zur Einstellung der Sitzposition erstrecken sich entlang eine Höhenachse Z einer Längsachse X und einer Breitenachse Y.

Der Fahrzeugsitz 1 kann selbstverständlich eine Rückenlehne, ein Kopfteil und Armlehnen umfassen, wie dies beispielsweise in den Figuren 1a und 1b dargestellt ist. Das Sitzteil 4 kann ein Schalenelement mit einem darauf angeordneten Polsterelement oder lediglich ein Polsterelement umfassen. Das Sitzteil 4 umfasst einen vorderen Bereich 4a, welcher bei einer Ausführungsform als Fahrersitz zu der Pedalerie des Fahrzeugs hinzeigt. Der dem vorderen Bereich gegenüberliegende hintere Bereich 4b grenzt an die Rückenlehne an. Dementsprechend kann ein vorderer Bereich 3b des Trägerelements 3 und ein hinterer Bereich des Trägerelements 3 definiert werden. Der Sitzunterbau 5 kann vorteilhafterweise ein Scherengestell 27 umfassen, mittels welchem der Fahrzeugsitz 1 an dem Fahrzeug, beziehungsweise dem Karosserieboden 29 befestigt ist. Ferner ist es von Vorteil, dass der Sitzunterbau 5 eine Feder und/oder Dämpfungseinrichtung 28 zur Federung/ Dämpfung von vertikalen und/oder horizontalen Schwingungen umfasst. Dies ist in den Figuren 1a und 1b angedeutet.

Wie aus den Figuren 1 bis 15c ersichtlich, ist die Vorrichtung 1 zur Einstellung einer Sitzposition ein modulares Bauelement und kann somit auf einfachste Weise in einem Fahrzeugsitz 1 integriert werden. Weiterhin können ältere Fahrzeugsitze mit solch einem modularen Bauelement nachgerüstet werden.

Der Neigungswinkel θ erstreckt sich zwischen einer Mittelachse 38 des zumindest einen Trägerelements 3 und einer Referenzachse 39, welche im Wesentlichen parallel zu einer Längsachse X der Vorrichtung 2 ist. Bei einem Neigungswinkel θ größer als 0° ist der vordere Bereich 4a des Sitzteils 4, beziehungsweise ein vorderer Bereich 3b des Trägerelements 3 entlang der Höhenrichtung Z nach oben geschwenkt. Bei einem Neigungswinkel θ kleiner als 0° der vordere Bereich 4b des Sitzteils 4, beziehungsweise ein vorderer Bereich 3b des Trägerelements 3 entlang der Höhenrichtung Z nach unten geschwenkt.

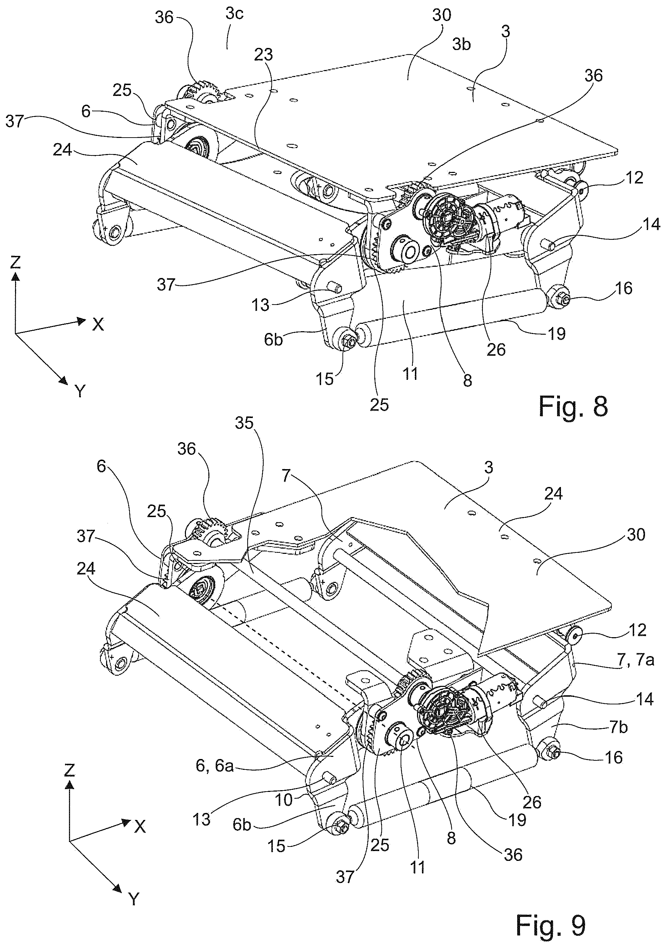

Der zumindest eine erste Schenkel 6 ist entlang der Längsachse X hinter dem zumindest einen zweiten Schenkel 7 angeordnet. Ferner sind der zumindest eine erste Schenkel 6 und der zumindest eine zweite Schenkel 7 entlang der Längsachse X mittels einer ersten Längsverbindung 9 verbunden. Die erste Längsverbindung 9 wird durch das zumindest eine Trägerelement 3 oder durch das Sitzteil 4 realisiert. In den Figuren 8 bis 15c umfasst das Trägerelement 3 ein plattenartiges Element 30, auf welchem das Sitzteil 4 angeordnet werden kann. Die erste Längsverbindung 9 ist somit durch das plattenartige Element 30 gegeben.

Ferner ist der zumindest eine erste Schenkel 6 entlang der Längsachse X mit dem zumindest einem zweiten Schenkel 7 mittels einer zweiten Längsverbindung 10 verbunden, welche durch den Sitzunterbau 5 realisiert ist.

Der zumindest eine erste Schenkel 6 und der zumindest eine zweite Schenkel 7 weisen jeweils einen ersten Abschnitt 6a, 7a und einen Hebelabschnitt 6b, 7b auf. Der erste Abschnitt 6a, 7a und der Hebelabschnitt 6b, 7b erstrecken sich im Wesentlichen geradlinig und schließen dabei einen Winkel β ein, wodurch der zumindest eine erste Schenkel 6 und der zumindest eine zweite Schenkel 7 im Wesentlichen L-förmig ausgestaltet sind. Der Winkel β ist demnach in einem Bereich zwischen 20° und 100°, bevorzugt zwischen 45° und 90°, weiter bevorzugt zwischen 95° und 85°, weiter bevorzugt 90°. Demnach ist zwischen dem ersten Abschnitt 6a, 7a und dem Hebelabschnitt 6b, 6b ein Knickbereich 6c, 7c vorgesehen.

Der zumindest eine erste Schenkel 6 ist um eine erste Drehachse 11 relativ zu dem Trägerelement 3 drehbar gelagert. Der zumindest eine erste Schenkel 6 und das Trägerelement 3 schließen dabei einen ersten Winkel α ein. Vorteilhafterweise erstreckt sich der Winkel α zwischen einer Mittelachse des ersten Schenkels 6 und einer fiktiven Bezugslinie des Trägerelements, welche im Wesentlichen senkrecht zu dem Sitzteil verläuft.

Der zumindest eine zweite Schenkel 7 ist um eine zweite Drehachse 12 relativ zu dem Trägerelement 3 drehbar gelagert. Der jeweilige erste Abschnitt 6a, 7a des zumindest einen ersten Schenkels 6 und des zumindest einen zweiten Schenkels 7 weisen einen oberen Endbereich auf, in welchem die Drehachse 11, 12 bezüglich der Drehung relativ zu dem Trägerelement 3 angeordnet ist.

Der zumindest eine erste Schenkel 6 ist um eine dritte Drehachse 13 relativ zu dem Sitzunterbau 5 drehbar gelagert. Der zumindest eine zweite Schenkel 7 ist um eine vierte Drehachse 14 relativ zu dem Sitzunterbau 5 drehbar gelagert. Die dritte Drehachse 13 und die vierte Drehachse 14 sind in dem jeweiligen Knickbereich 6c, 7c angeordnet. Demnach würde sich der erste Abschnitt 6a des ersten Schenkels 6 im Wesentlichen zwischen der ersten Drehachse 11 und der dritten Drehachse 13 erstrecken. Der erste Abschnitt 7a des zweiten Schenkels 7 erstreckt sich im Wesentlichen zwischen der zweiten Drehachse 12 und der vierten Drehachse 14.

Der zumindest eine zweite Schenkel 7 ist indirekt mit dem zumindest einen Trägerelement 3 verbunden. Dabei ist der zumindest eine zweite Schenkel 7 über ein Beabstandungselement, beziehungsweise ein Pleuel 33 mit dem Trägerelement 3 verbunden. Das Beabstandungselement, beziehungsweise Pleuel 33 ist um die zweite Drehachse 12 relativ zu dem zumindest einen zweiten Schenkel 7 drehbar. Ferner ist das Beabstandungselement, beziehungsweise Pleuel 33 um eine siebte Drehachse 34 relativ zu dem Trägerelement 3 drehbar. Das Beabstandungselement 33 stellt zusätzlichen Freiheitsgrad zur Verfügung, durch welchen eine Neigungseinstellung des Sitzteils 4 erleichtert wird.

Das Verbindungselement 19 ist zwischen dem Hebelabschnitt 6b des ersten Schenkels 6 und dem Hebelabschnitt 7b des zweiten Schenkels 7 angeordnet. Der erste Schenkel 6 ist dabei um eine fünfte Drehachse 15 relativ zu dem Verbindungselement 19 drehbar gelagert. Der zweite Schenkel 7 ist um eine sechste Drehachse 16 relativ zu dem Verbindungselement 19 drehbar gelagert. Die fünfte Drehachse 15 und die sechste Drehachse 16 sind jeweils in einem unteren Endbereich der Hebelabschnitte 6b, 7b angeordnet. Der jeweilige Hebelabschnitt 6b, 7b erstreckt sich somit im Wesentlichen zwischen der dritten Drehachse 13 und der fünften Drehachse 15, beziehungsweise zwischen der vierten Drehachse 14 und der sechsten Drehachse 16. Demnach kann eine dritte vorzugsweise in ihrer Länge modifizierbare Längsverbindung 23 entlang der Längsachse X definiert werden, welche zwischen dem Hebelabschnitt 6b des zumindest einen ersten Schenkels 6 und dem Hebelabschnitt 7b des zumindest einen zweiten Schenkels 7 sich erstreckt und durch das Verbindungselement 19 realisiert wird.

Die Vorrichtung 1 umfasst zwei erste Schenkel 6 und zwei zweite Schenkel 7. Die beiden ersten Schenkel 6 und die beiden zweiten Schenkel 7 sind jeweils entlang der Breitenachse Y voneinander beabstandet. Die beiden sich gegenüberliegenden ersten Schenkel 7 und die beiden sich gegenüberliegenden zweiten Schenkel 7 sind jeweils im Wesentlichen identisch. Die weitere Beschreibung der Schenkel 6, 7 in Form von zumindest einem Schenkel 6, 7 ist demnach auf das jeweilige Paar an Schenkeln anzuwenden. Die beiden ersten Schenkel 6 und die beiden zweiten Schenkel 7 sind weiterhin um die jeweils gleichen Drehachsen 11, 12, 13, 14, 15, 16 drehbar. Ferner sind die entlang der Breitenachse Y sich gegenüberliegenden Schenkel 6, 7 mittels zumindest einer Querverbindung 24 verbunden. Eine solche Querverbindung 24 ist durch das Trägerelement 3, welches als plattenartiges Element 30 ausgebildet ist, realisiert. Ferner können noch weitere Streben, Platten etc. vorhanden sein, welche ebenso die Querverbindung 24 ausbilden.

Der Winkel α ist durch eine Winkeleinstelleinrichtung 8 einstellbar. Eine Änderung des Winkels α verursacht eine Verlagerung des zumindest einen Trägerelements 3 entlang einer Höhenachse Z und entlang einer Längsachse X. Eine Änderung des Winkels α, welche eine Verlagerung des zumindest einen Trägerelements 3 entlang der Höhenachse Z nach unten verursacht, verursacht zugleich eine Verlagerung des zumindest einen Trägerelements 3 entlang der Längsachse X nach vorne und gegebenenfalls (falls der Hebelabschnitt 7b eine größere Länge aufweist als der Hebelabschnitt 6b) eine Änderung des Neigungswinkels θ in negativer Richtung. Eine Änderung des Winkels α, welche eine Verlagerung des zumindest einen Trägerelements 3 entlang der Höhenachse Z nach oben verursacht, verursacht zugleich eine Verlagerung des zumindest einen Trägerelements 3 entlang der Längsachse X nach hinten und gegebenenfalls (falls der Hebelabschnitt 7b eine größere Länge aufweist als der Hebelabschnitt 6b) eine Änderung des Neigungswinkels θ in positiver Richtung.

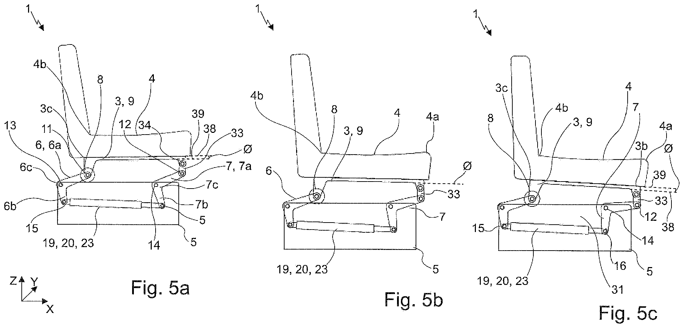

Bei der Ausführungsform gemäß den Figuren 5a bis 5c weist der Hebelabschnitt 7b des zumindest einen zweiten Schenkels 7 eine größere Länge auf als der Hebelabschnitt 6b des zumindest einen ersten Schenkels 6. Bei einer Änderung des Winkels α durch eine Winkeleinstelleinrichtung 8 dreht sich der zumindest eine erste Schenkel 6 um dritte Drehachse 13, durch die mechanische Kopplung mittels des Verbindungselements 19, wird eine Drehung des zumindest einen zweiten Schenkels 7 um die vierte Drehachse 14 verursacht. Der entsprechende Drehwinkel um diese vierte Drehachse 14 wird bestimmt durch die Länge des Hebelabschnitts, beziehungsweise den Abstand zwischen der sechsten Drehachse 16 und der vierten Drehachse 14. Durch die größere Länge des Hebelabschnitts des zweiten Schenkels 7, wird der zumindest eine zweite Schenkel 7 um einen größeren Drehwinkel um die vierte Drehasche gedreht, als der zumindest eine erste Schenkel 6 um die dritte Drehachse 13. Durch die Drehung des zumindest zweiten Schenkels 7 um die vierte Drehasche 14, wird eine Drehung des Beabstandungselements 33 um die zweite Drehasche 12 und die siebte Drehachse 34 verursacht. Hierdurch wird wiederum eine Änderung des Neigungswinkels θ verursacht. Ferner findet eine Verlagerung des Trägerelements 3 entlang der Höhenrichtung Z und entlang der Längsrichtung X statt.

Bei einer Modifikation der Länge des Verbindungselements 19 wird der Abstand zwischen der fünften Drehachse 15 und der sechsten Drehachse 16, beziehungsweise zwischen den beiden Hebelabschnitten 6b, 7b der Schenkel 6, 7 verringert oder vergrößert.

Die Modifikation der Länge des Verbindungselements 19 verursacht eine Drehung des zumindest einen zweiten Schenkels 7 um zumindest die sechste Drehachse 16 und um die vierte Drehachse 14. Ferner kann ebenso die Modifikation der Länge des Verbindungselements 19 eine Drehung des zumindest einen zweiten Schenkels 7 um die zweite Drehachse 12 verursachen. Der Winkel α kann, muss aber nicht, während der Modifikation fixiert sein.

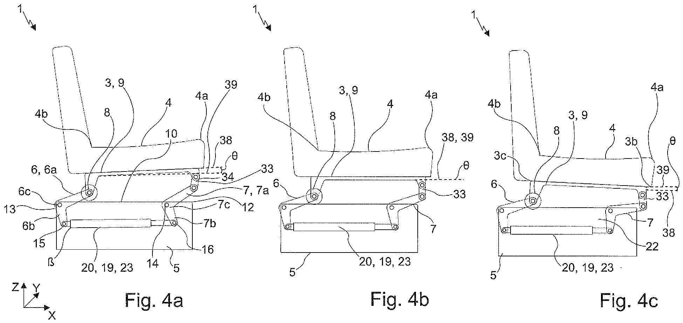

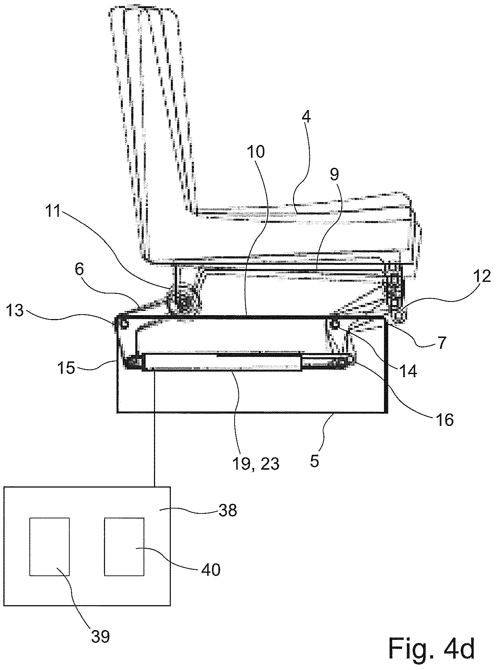

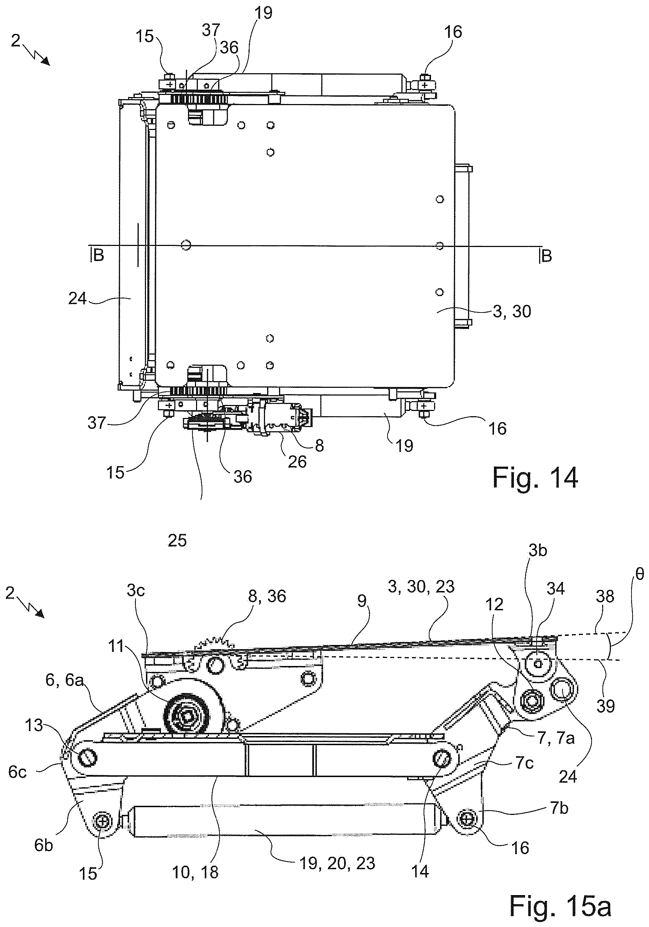

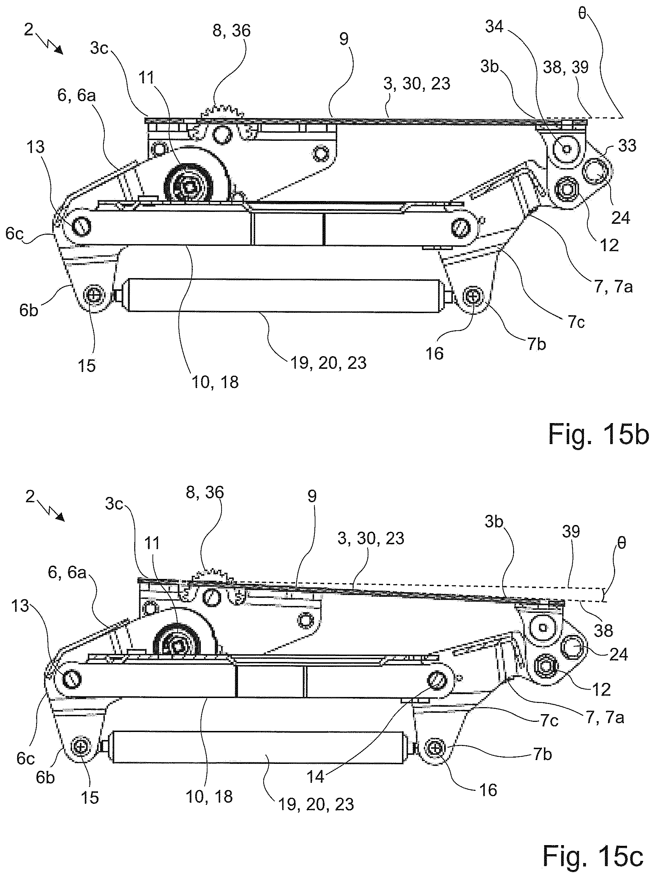

Der Neigungswinkel θ erstreckt sich zwischen einer Mittelachse 38 des zumindest einen Trägerelements 3 und einer Referenzachse 39, welche im Wesentlichen parallel zu der Längsachse X der Vorrichtung 2 ist. Die Änderung des Neigungswinkels θ ist dabei proportional zu der Änderung der Länge des Verbindungselements 19. In den Figuren 4a und 15a ist dabei eine Neigung des Trägerelements 3, beziehungsweise des Sitzteils 4 nach hinten dargestellt. Die zweite Drehachse 12, die siebte Drehachse 34 und somit ein vorderer Bereich des Trägerelements 3, beziehungsweise des Sitzteils 4 werden dabei entlang der Höhenachse Z nach oben verlagert, beziehungsweise geschwenkt. Die Länge des Verbindungselements 19 wurde vergrößert und die sechste Drehachse 16 im Wesentlichen entlang der Längsachse X nach vorne verlagert. Der Neigungswinkel θ hat demnach positive Werte. In den Figuren 4b und 15b ist das Trägerelement 3, beziehungsweise das Sitzteil im Wesentlichen horizontal ausgerichtet. Der Neigungswinkel θ zwischen einer Mittelachse 38 und der Referenzachse 39 beträgt somit im Wesentlichen 0°. In den Figuren 4c und 15c ist eine Neigung des Trägerelements 3, beziehungsweise des Sitzteils 4 nach vorne dargestellt. Die zweite Drehachse 12, die siebte Drehachse 34 und somit ein vorderer Randbereich des Trägerelements 3, beziehungsweise des Sitzteils 4 wird dabei entlang der Höhenachse Z nach unten verlagert, beziehungsweise geschwenkt. Die Länge des Verbindungselements 19 wurde verkleinert und die sechste Drehachse 16 im Wesentlichen entlang der Längsachse X nach hinten verlagert. Der Neigungswinkel θ hat in diesem Fall negative Werte. In Figur 4d ist der Fahrzeugsitz 1 dargestellt, wobei verschiede Neigungseinstellungen des Fahrzeugsitzes 1 angedeutet sind.

Das Beabstandungselement, beziehungsweise das Pleuel 33 rotiert bei den Neigungsänderungen gemäß den Figuren 4a bis 4c und 15a bis 15c entsprechend. Bei der im Wesentlichen horizontalen Ausrichtung des Sitzteils 4 in den Figuren 4b und 15b ist das Beabstandungselement, beziehungsweise das Pleuel 33 derart ausgerichtet, dass die zweite Drehachse 12 und die siebte Drehachse 34 im Wesentlichen entlang der Höhenachse Z übereinander angeordnet sind. In der Neigungsanordnung des Sitzteils 4 gemäß den Figuren 4a und 15a ist das Beabstandungselement, beziehungsweise das Pleuel 33 derart ausgerichtet, dass die siebte Drehachse 34 relativ zu der zweiten Drehachse 12 entlang der Längsrichtung X nach vorne verlagert ist. In der Neigungsanordnung des Sitzteils 4 gemäß den Figuren 4c und 15c ist das Beabstandungselement, beziehungsweise das Pleuel 33 derart ausgerichtet, dass die siebte Drehachse 34 relativ zu der zweiten Drehachse 12 entlang der Längsrichtung X nach hinten verlagert ist.

Die Länge des Verbindungselements 19 ist kontinuierlich einstellbar. Darüber hinaus ist das Verbindungselement 19 dazu geeignet und dafür vorgesehen, dessen modifizierbare Länge zu halten, vorzugsweise bis eine erneute Modifikation durchgeführt wird Entsprechende unerwünschte Krafteintragungen auf die Vorrichtung 2, beziehungsweise das Verbindungselement 19 verursachen somit keine unerwünschte Änderung der Länge des Verbindungselements 19. Das Verbindungselements 19 kann eine blockierbare Gasfeder oder ein Stellelement sein. Denkbar sind jedoch auch noch weitere ähnliche Elemente, mittels welcher die Länge modifiziert und festgehalten werden kann. Ein Stellelement umfasst beispielsweise ein Spindelhubgetriebe, welches durch einen Antrieb, beispielsweise einen Elektromotor angetrieben wird. Durch das Spindelhubgetriebe wird die rotierende Bewegung des Antriebes in eine lineare Bewegung übersetzt. In der Ruhstellung blockiert das Spindelhubgetriebe eine weitere lineare Bewegung. Blockierbare Gasfedern, lassen sich in Zug- oder Druckrichtung stufenlos blockieren. In der Regel umfassen blockierbare Gasfedern ein Kolben-Ventilsystem, welches die beiden Druckräume in der Feder voneinander trennt. Dies ermöglicht die stufenlose Blockierung ohne Kraftaufwand. Wird der Ventilstößel von außen freigegeben und der Austausch zwischen den beiden Druckkammern unterbrochen, blockiert die Gasfeder.

Das Verbindungselement kann manuell mittel eines Bedienelements, beispielsweise eines Hebels bedient werden. Alternativ oder kumulativ kann eine Bedien- und Steuereinrichtung 38 vorgesehen sein, mittels welcher das Verbindungselements 19 ansteuerbar ist. Die eine Bedien- und Steuereinrichtung 38 kann dabei ein Bedienelement 40 umfassen, welches ein Hebel, ein Knopf, ein Joystick oder ähnliches sein kann. Die Bedien- und Steuereinrichtung 38 kann weiterhin eine Speichereinrichtung 39 umfassen, mittels welcher bestimmte Längenwerte des Verbindungselements 19 speicherbar sind. Dies ist beispielsweise in Figur 4d dargestellt. Der Nutzer kann demnach bestimmte präferierte Neigungseinstellungen direkt ansteuern.

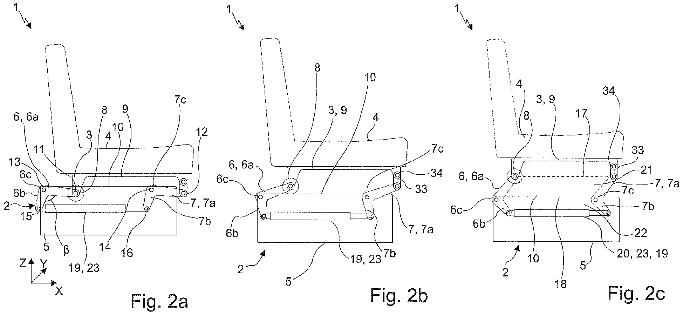

Der erste Abschnitt 6a des zumindest einen ersten Schenkels 6 und der erste Abschnitt 7a des zumindest einen zweiten Schenkels 7 weisen eine gleiche Länge auf. Die ersten Drehachse 11 und die zweite Drehachse 12 liegen auf einer ersten fiktiven oder realen Verbindungslinie 17. Ebenso liegen die dritte Drehachse 13 und die vierte Drehachse 14 auf einer zweiten fiktiven oder realen Verbindungslinie 18. Die erste Verbindungslinie 17, die zweite Verbindungslinie 18 und die ersten Abschnitte 6a, 7a des zumindest einen ersten Schenkels 6 und des zumindest einen zweiten Schenkels 7 bilden somit ein erstes Trapez 21. Dies ist gut in Figur 2c erkennbar. Da die beiden Verbindungslinien 17 und 18 die gleiche Länge aufweisen, ist das Trapez 21 ein Parallelogramm.

Aus Figur 9 ist ersichtlich, dass in den Endbereichen der beiden ersten Schenkel 6, in den Endbereichen der beiden zweiten Schenkel 7 sowie in den Knickbereichen 6c, 7c jeweils ein Drehgelenk oder eine Drehlagerung angeordnet ist. Die jeweilige Drehachse 11, 12, 13, 14, 15, 16 ist demnach fiktiv. Selbstverständlich könnte auch jeweils eine durchgehende reale Drehachse 11, 12, 13, 14 vorgesehen sein.

Die fünfte Drehachse 15 und die sechste Drehachse16 liegen auf einer dritten fiktiven oder realen Verbindungslinie 20.

In den Ausführungsformen gemäß den Figuren 2a bis 2c und 4a bis 4d weisen der Hebelabschnitt 6b des zumindest einen ersten Schenkels 6 und der Hebelabschnitt 7b des zumindest einen zweiten Schenkels 7 eine gleiche Länge auf. Demnach bilden die zweite Verbindungslinie 18, die dritte Verbindungslinie 20 und die Hebelabschnitte 6b, 7b ein zweites Trapez 22.

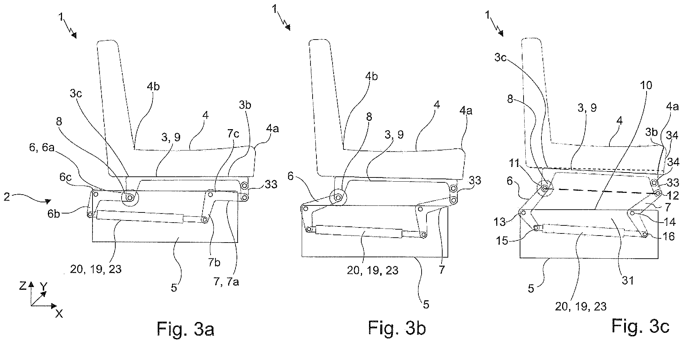

In den Ausführungsformen gemäß den Figuren 3a bis 3c und 5a bis 5c hat der Hebelabschnitt 7b des zumindest einen zweiten Schenkels 7 eine größere Länge als der Hebelbschnitt 6b des zumindest einen ersten Schenkels 6. Die zweite Verbindungslinie 18, die dritte Verbindungslinie 20 und die Hebelabschnitte 6b, 7b bilden demnach ein allgemeines Viereck 31. Hierdurch kann bei einer Änderung des Winkels α neben eine Änderung der Sitzposition entlang der Höhenachse Z und der Änderung der Sitzposition entlang der Längsachse X auch eine Änderung der Neigung des Sitzteils 4, beziehungsweise des Trägerelements 3 verursacht werden. Durch eine entsprechende Anpassung der Länge des Verbindungselement 19 kann bei einer solchen Änderung der Sitzposition die Neigung des Sitzteils 4 derart angepasst werden, dass das Sitzteil 4 horizontal ausgerichtet ist.

Die erste Verbindungslinie 18 kann demnach der ersten Längsverbindung 9 entsprechen. In den Figuren 1 bis 14 ist jedoch gezeigt, dass die erste Längsverbindung 9 und die erste fiktive Verbindungslinie 18 entlang der Höhenachse Z voneinander beabstandet sind. Die zweite Verbindungslinie 18 entspricht der zweiten Längsverbindung 10, wobei die Erfindung nicht hierauf beschränkt ist. Die dritte Verbindungslinie 20 kann, muss aber nicht, der dritten Längsverbindung 23, beziehungsweise dem Verbindungselement 19 entsprechen. Die mechanische Kopplung umfasst vorzugsweise die erste Längsverbindung 9, die zweite Längsverbindung 10, die dritte Längsverbindung 23. Ferner kann bei der Ausführungsform, in welcher die ersten Schenkel 6 und zweiten Schenkel 7 als Schenkelpaare ausgeführt sind, die Querverbindung 24 zu der mechanischen Kopplung zugehörig betrachtet werden.

Der zumindest eine erste Schenkel 6, beziehungsweise das entsprechende Schenkelpaar ist/sind direkt über eine Drehlagerung an dem Trägerelement 3 angeordnet, beziehungsweise drehbar gelagert. Die erste Drehachse 11 verläuft entsprechend zentrisch durch diese Drehlagerung. Der zumindest eine zweite Schenkel 7, beziehungsweise das entsprechende Schenkelpaar ist indirekt über das Beabstandungselement 33 und eine entsprechende Drehlagerung an dem Trägerelement 3 angeordnet, beziehungsweise gelagert. Weiterhin ist das Beabstandungselement 33 mittels einer weiteren Drehlagerung an dem Trägerelement 3 angeordnet. Die zweite Drehachse 12 verläuft entsprechend zentrisch durch diese Drehlagerung. Der zumindest eine zweite Schenkel 7, beziehungsweise das entsprechende Schenkelpaar können ebenso direkt über eine Drehlagerung an dem Trägerelement 3 angeordnet, beziehungsweise gelagert sein.

In der Ausführungsform anhand der Figuren 2a bis 2c ist die Kinematik der Höhenverstellung in Form eines zweiten Trapezes 22 umgesetzt. Dieses Trapez 22 ist veränderbar, um eine zusätzliche Neigungsverstellung über den Freiheitsgrad des beweglichen Pleuels 33 zu ermöglichen. Bei einer Höhenveränderung bewegt sich das Sitzteil 4 parallel zur Ausgangslage nach oben (unten), d. h. es wird keine Winkelveränderung in der Ebene XY hinsichtlich des Sitzteils 4 vorgenommen. Eine Winkelveränderung kann hierbei ausschließlich über die Veränderung der Länge des Verbindungselements 19 erfolgen. Zugleich bewegt sich das Sitzteil 4, durch die Schwenkbewegung der Schenkel 6, 6 in Längsrichtung X nach hinten (vorne). Sollte in dieser Ausführungsform keine Neigungsverstellung erforderlich sein, kann die Kinematik auch als einfaches Parallelogramm ausgebildet sein. Hierbei kann auch das Pleuel 33 entfallen und wird dann direkt mit dem hierfür angepassten Trägerelement 3 über die zweite Drehachse 12 verbunden. In Figur 2a ist dabei eine unterste Stellung gezeigt, in welcher die geringste Sitzhöhe eingenommen wird. Ferner ist die Sitzposition in Längsrichtung X nach vorne maximal. In Figur 2c ist dabei eine oberste Stellung gezeigt, in welcher die maximale Sitzhöhe und die maximale Sitzposition in Längsrichtung X nach hinten eingenommen wird. In Figur 2b ist eine entsprechend mittlere Sitzposition dargestellt. Die Sitzposition in Längsrichtung kann jedoch gegebenenfalls durch eine zusätzliche Einstelleinrichtung weiter modifiziert werden.

In der Ausführungsform anhand der Figuren 3a bis 3c ist die Kinematik der Höhenverstellung in Form eines allgemeinen Vierecks umgesetzt. Dies ermöglicht eine weitere Neigungsveränderung des Sitzoberteil in der XY-Ebene. Bei einer Höhenveränderung bewegt sich das Sitzteil 4 nicht parallel zur Ausgangslage nach oben (unten), d. h. es wird eine Winkelveränderung in der Ebene XY hinsichtlich des Sitzteils 4 vorgenommen. Erreicht wird dieser kinematische Ablauf durch unterschiedliche Geometrien der beiden Schenkel 6, 7. In den dargestellten Abbildungen neigt sich die Sitzfläche bei einer Höhenveränderung nach vorne, bzw. nach hinten. Eine zusätzliche Neigungsverstellung ist mittels des in der Länge modifizierbaren Verbindungselements 19 möglich. Das Verbindungselement 19 kann jedoch auch als ein starres Element vorgesehen sein. Hier ist es jedoch erforderlich, dass ein Beabstandungselement 33, beziehungsweise Pleuel vorgesehen ist. Durch eine Verschwenkung des Beabstandungselements 33 um die zweite Drehachse 12 und die siebte Drehachse 34 kann ein entsprechender Ausgleich entlang der Längsachse X erfolgen, wodurch eine Neigung des Sitzteils 4 vermieden wird. Es kann demnach eine Höhenveränderung des Sitzteils 4 parallel zur Ausgangslage nach oben (unten) vorgenommen werden, d. h. es wird keine Winkelveränderung in der Ebene XY hinsichtlich des Sitzteils 4 vorgenommen. In Figur 3a ist dabei eine unterste Stellung gezeigt, in welcher die geringste Sitzhöhe eingenommen wird. Ferner ist die Sitzposition in Längsrichtung X nach vorne maximal. In Figur 3c ist dabei eine oberste Stellung gezeigt, in welcher die maximale Sitzhöhe und die maximale Sitzposition in Längsrichtung X nach hinten eingenommen wird. Dabei ist durch eine entsprechende Drehung des Pleuels 33 das Sitzteil im Wesentlichen waagrecht. In Figur 3b ist eine entsprechend mittlere Sitzposition dargestellt. Die Sitzposition in Längsrichtung kann jedoch gegebenenfalls durch eine zusätzliche Einstelleinrichtung weiter modifiziert werden.

In der Ausführungsform anhand der Figuren 4a bis 4c ist eine Kinematik mittels eines zweiten Trapezes 22 dargestellt. In dieser Kinematik wird eine Neigungsverstellung über eine Längenänderung des Verbindungselements 19 vorgenommen. Im dargestellten Fall ist eine Winkeländerung der Ebene XY, um die Y-Achse ausgehend, von der Mittelstellung von ca. +/-3°, vorgesehen. Das Verbindungselements 19 ist in der beschriebenen Version als blockierbare Gasfeder ausgeführt. Diese beinhaltet eine definierte Ausschubkraft und ebenfalls festgelegte Endlagen (Einlänge/Auslänge). Ebenso sind andere Ausführungen für dieses Verbindungselement 19 angedacht, wie zum Beispiel eine elektrische Variante in Form eines Spindelhubgetriebes mit der Möglichkeit der Memorisierung. In Figur 4b ist eine Sitzposition dargestellt, in welcher sich das Sitzteil im Wesentlichen horizontal, beziehungsweise parallel zu einer Ebene XY, welche durch die Längsachse X und die Breitenachse Y aufgespannt wird, ausgerichtet ist. In Figur 4a ist eine Sitzposition dargestellt, in welcher sich das Sitzteil 4 nach hinten neigt. Im Vergleich zu der Sitzposition in Figur 4b hat das Verbindungselement 19 hier eine größere Länge. In Figur 4c ist eine Sitzposition dargestellt, in welcher sich das Sitzteil 4 nach vorne neigt. Im Vergleich zu der Sitzposition in Figur 4b hat das Verbindungselement 19 hier eine geringere Länge. Auch hier wird durch eine Drehung des Pleuels 33 ein entsprechender Ausgleich der Auslenkung entlang der Längsachse ermöglicht.

In der Ausführungsform anhand der Figuren 5a bis 5c ist eine Kinematik der Höhenverstellung in Form eines allgemeinen Vierecks umgesetzt, welche eine zusätzliche Neigungsverstellung mittels eines in der Länge modifizierbaren Verbindungselements 19 ermöglicht, ähnlich zu der Ausführungsform gemäß den Figuren 4a bis 4c. Im Unterschied zu dieser Ausführungsform kann hier die Neigungsveränderung im Hub-oben-Bereich hauptsächlich genutzt werden, um eine Waagrechte für die Ebene XY zu ermöglichen. In den unteren bis mittleren Positionen verhält sich das System ähnlich der Ausführungsform anhand der Figuren 5a bis 5c. In Figur 4b ist eine Sitzposition dargestellt, in welcher sich das Sitzteil im Wesentlichen horizontal, beziehungsweise parallel zu einer Ebene XY, welche durch die Längsachse X und die Breitenachse Y aufgespannt wird, ausgerichtet ist. In Figur 5b ist eine Sitzposition dargestellt, in welcher sich das Sitzteil im Wesentlichen horizontal, beziehungsweise parallel zu der Ebene XY ausgerichtet ist. In Figur 5a ist eine Sitzposition dargestellt, in welcher sich das Sitzteil 4 nach hinten neigt. In Figur 5c ist eine Sitzposition dargestellt, in welcher sich das Sitzteil 4 nach vorne neigt. Auch hier wird durch eine Drehung des Pleuels 33 ein entsprechender Ausgleich der Auslenkung entlang der Längsachse ermöglicht.

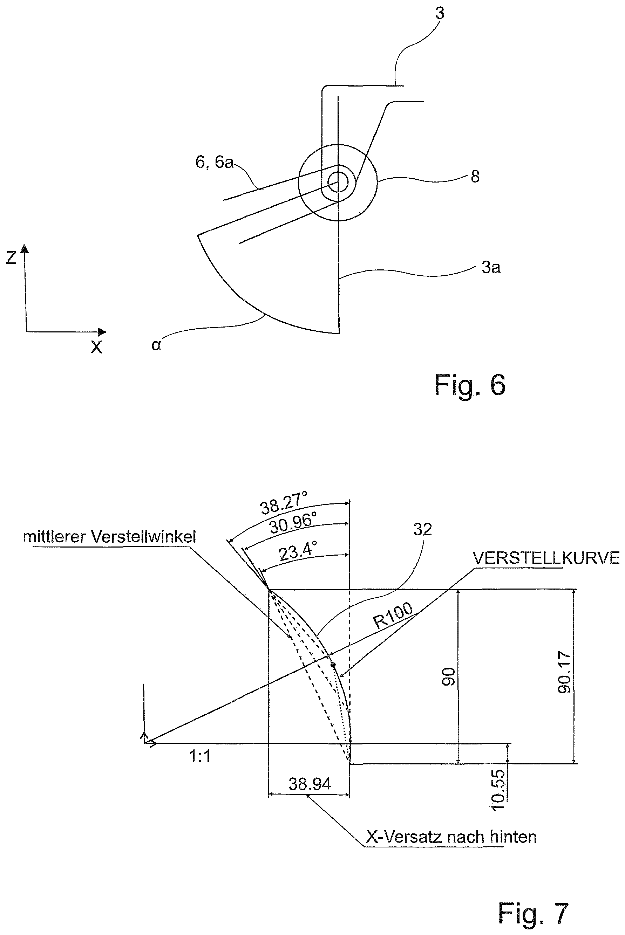

In der Figur 6 wird der Ausschnitt um die erste Drehachse 11 vergrößert gezeigt. Insbesondere ist hier der Winkel α gut ersichtlich. Der Winkel α erstreckt sich zwischen einer Mittelachse 6d des ersten Schenkels 6 und einer fiktiven Bezugslinie des Trägerelements 3a. Diese Bezugslinie ist im Wesentlichen senkrecht zu dem plattenartigen Element 30. Bei einer neigungsfreien Ausrichtung des Trägerelements 3, beziehungsweise des Sitzteils 4, in welcher das Sitzteils 4 im Wesentlichen parallel zu Ebene XY verläuft, ist die Bezugslinie des Trägerelements 3a im Wesentlichen parallel zu der Höhenachse Z. Der Winkel α liegt in einem Bereich zwischen 0° und 140°. Bevorzugt liegt der Winkel α in einem Bereich zwischen 0° und 120°. Weiter bevorzugt liegt der Winkel α in einem Bereich zwischen 0°und 90°.

In den Figuren 1a, 1b und 7 ist eine Verstellkurve 32 des Fahrzeugsitzes 1 ersichtlich. Eine Änderung des Winkels α, welche eine Verlagerung des zumindest einen Trägerelements 3, beziehungsweise des Sitzteils 4 entlang der Höhenachse Z nach unten verursacht, verursacht zugleich eine Verlagerung des zumindest einen Trägerelements 3, beziehungsweise des Sitzteils 4 entlang der Längsachse X nach vorne. Eine Änderung des Winkels α, welche eine Verlagerung des zumindest einen Trägerelements 3, beziehungsweise des Sitzteils 4 entlang der Höhenachse Z nach oben verursacht, verursacht zugleich eine Verlagerung des zumindest einen Trägerelements 3, beziehungsweise des Sitzteils entlang der Längsachse X nach hinten. In Figur 7 sind beispielhafte Werte für den Verstellwinkel den Versatz nach hinten und den Versatz nach oben angegeben. Die Erfindung beschränkt sich natürlich nicht auf diese Werte.

In den Figuren 8 bis 14 ist die Winkeleinstelleinrichtung 8 gut erkennbar. Die Winkeleinstelleinrichtung 8 umfasst eine Feststelleinrichtung 25, welche auch als Recliner bezeichnet werden kann und welche einen eingestellten Winkel α feststellt. Weiterhin umfasst die Winkeleinstelleinrichtung 8 einen Antrieb 26, mittels welchem die Feststelleinrichtung 25 angetrieben wird, um den Winkel α zu verändern. Vorzugsweise umfasst die Winkeleinstelleinrichtung 8 eine Steuereinheit, welche den Antrieb 26 ansteuert. Dabei ist es von Vorteil, dass in der Steuereinheit bestimmte Sitzposition speicherbar sind. Der Nutzer kann dann zwischen den gespeicherten Positionen wechseln. Vorzugsweise ist eine Bedieneinrichtung vorgesehen, mittels welcher der Nutzer entsprechende Eingaben machen kann. Der Antrieb 26 ist mit einer Primärwelle 35 formschlüssig verbunden. Die Primärwelle 35, welche aus bauraumtechnischen Gründen vorgesehen ist, erstreckt sich von der rechten zur linken Seite und beinhaltet an beiden Enden ein, ebenfalls formschlüssig verbundenes, Stirnrad 36. Die Stirnräder 36 der Primärwelle 35 übertragen die Kraft weiter auf jeweils ein weiteres Stirnrad 37, diese sind ebenfalls formschlüssig mittels kurzen Sekundärachsen mit jeweils einer Feststelleinrichtung 25, beziehungsweise Recliner verbunden. Die beiden Feststelleinrichtungen 25 verbinden kraftschlüssig die ersten Schenkel 6 jeweils links und rechts mit dem Trägerelement 3. Bei Betätigung der Höhenverstellung wird demnach ein Drehmoment durch den Antrieb 26 erzeugt. Das Drehmoment und die Rotation wird von der Primarwelle 35 mittels der Stirnräder 36, 37 auf die Sekundärwellen, welche mit der Feststelleinrichtung 25 verbunden sind, übertragen. Das Drehmoment wird demnach links und rechts synchron übertragen. Hierdurch wird ein Verschwenken der ersten Schenkel relativ zu dem Trägerelement 3 verursacht.

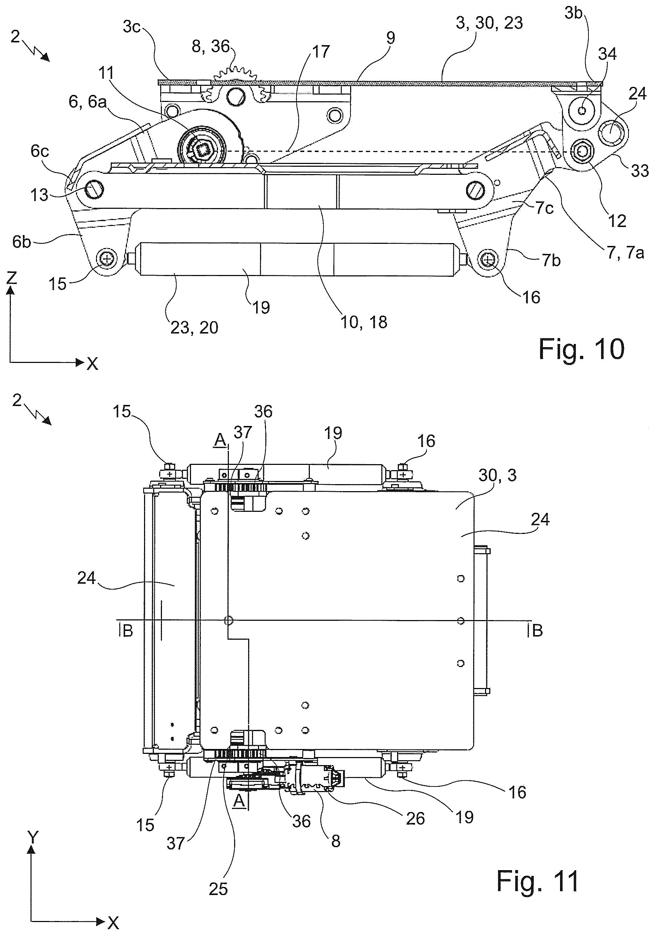

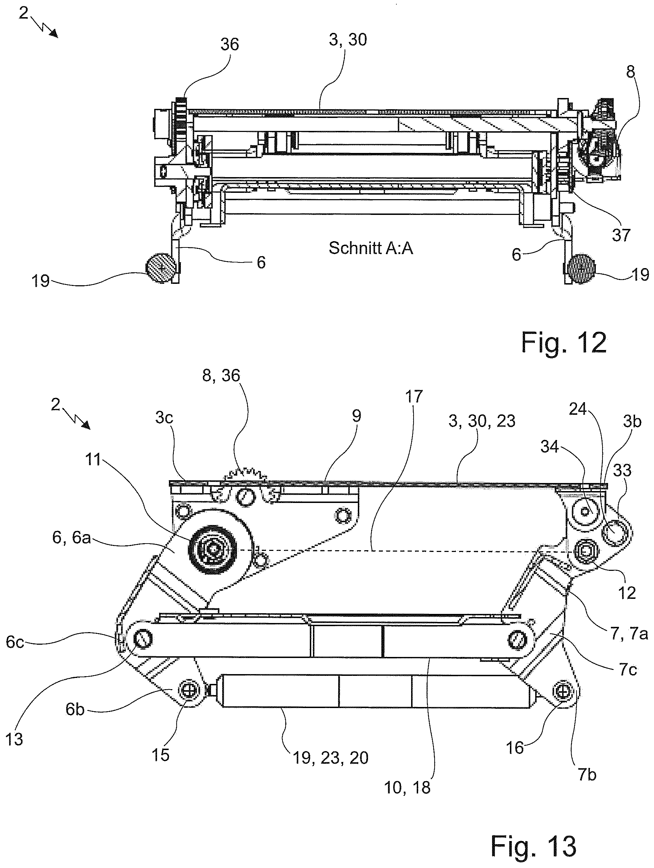

Die Figuren 11 und 14 stellen eine jeweilig Draufsicht auf die Vorrichtung 2 dar, wobei in Figur 12 ein Schnitt der Vorrichtung 2 dargestellt ist. Die Figur 10 und 13 zeigen eine Seitenansicht, in welcher die Verschwenkung der Schenkel 6, 7 zum Trägerelement 3 ersichtlich ist. Die Gleichhaltung bzw. Zwangsteuerung des ersten Schenkels 6 übernimmt hierbei das Verbindungselement 19, welche als starres oder in seiner Länge veränderbares Element ausgeführt sein kann.

Eine solche Vorrichtung 1 kann getrennt von der Vertikalfederung ausgestaltet sein. Eine Beeinflussung von Höhenverstellung und Federweg ist somit ausgeschlossen. Die Vorrichtung bietet eine ergonomische Verstellung des Sitzes und verursacht einen höhenabhängigen Abstand zu Lenkrad und Pedalerie.

### Bezugszeichenliste

- 1: Fahrzeugsitz
- 2: Vorrichtung zur Einstellung einer Sitzposition
- 3: Trägerelement
- 3a: Bezugslinie des Trägerelements
- 3b: vorderer Bereich des Trägerelements
- 3c: hinterer Bereich des Trägerelements
- 4: Sitzteil
- 4a: vorderer Bereich des Sitzteils
- 4b: hinterer Bereich des Sitzteils
- 5: Sitzunterbau
- 6: erster Schenkel
- 6a: erster Abschnitt des ersten Schenkels
- 6b: Hebelabschnitt des ersten Schenkels
- 6c: Knickbereich des ersten Schenkels
- 6d: Mittelachse des ersten Schenkels
- 7: zweiter Schenkel
- 7a: erster Abschnitt des zweiten Schenkels
- 7b: Hebelabschnitt des zweiten Schenkels
- 7c: Knickbereich des zweiten Schenkels
- 8: Winkeleinstelleinrichtung
- 9: erste Längsverbindung
- 10: zweite Längsverbindung
- 11: erste Drehachse
- 12: zweite Drehachse
- 13: dritte Drehachse
- 14: vierte Drehachse
- 15: fünfte Drehachse
- 16: sechste Drehachse
- 17: erste Verbindungslinie
- 18: zweite Verbindungslinie
- 19: Verbindungselement
- 20: dritte Verbindungslinie
- 21: erstes Trapez
- 22: zweites Trapez
- 22a: Viereck
- 23: dritte Längsverbindung
- 24: Querverbindung
- 25: Feststelleinrichtung
- 26: Antrieb
- 27: Scherengestell
- 28: Feder und/oder Dämpfungseinrichtung
- 29: Karosserieboden
- 30: plattenartiges Element
- 31: Viereck
- 32: Verstellkurve
- 33: Beabstandungselement/Pleuel
- 34: siebte Drehachse
- 35: Primärwelle
- 36: Stirnrad
- 37: Stirnrad
- 38: Bedien- und Steuereinrichtung
- 39: Speichereinrichtung
- 40: Bedienelement
- Z: Höhenachse
- X: Längsachse
- Y: Breitenachse
- α: Winkel
- β: Winkel
- θ: Neigungswinkel

## Patentansprüche

1. Vorrichtung (2) zur Einstellung einer Sitzposition für einen Fahrzeugsitz (1), welche zumindest ein Trägerelement (3) für ein Sitzteil (4) umfasst und mit einem Sitzunterbau (5) verbindbar ist,
wobei die Vorrichtung (2) zumindest einen ersten Schenkel (6) und zumindest einen zweiten Schenkel (7) umfasst, wobei der erste Schenkel (6) drehbar um eine dritte Drehachse (13) und der zweite Schenkel (7) drehbar um eine vierte Drehachse (14) an dem Sitzunterbau (5) und drehbar an dem zumindest einem Trägerelement (3) anordenbar sind, wobei ein erster Winkel α zwischen dem ersten Schenkel (6) und dem Trägerelement (3) durch eine Winkeleinstelleinrichtung (8) einstellbar ist, wobei der zumindest eine erste Schenkel (6) und der zumindest eine zweite Schenkel (7) jeweils einen Hebelabschnitt (6b, 7b) aufweisen, welche mechanisch gekoppelt sind und wobei der zumindest eine erste Schenkel (6) entlang einer Längsachse (X) hinter dem zumindest einem zweiten Schenkel (7) angeordnet ist, wobei eine Änderung des Winkels α eine Verlagerung des zumindest einen Trägerelements (3) entlang einer Höhenachse Z und eine Änderung eines Neigungswinkels θ des Trägerelements (3) verursacht, wobei der Neigungswinkel θ sich zwischen einer Mittelachse (38) des zumindest einen Trägerelements (3) und einer Referenzachse (39), welche im Wesentlichen parallel zu der Längsachse (X) ist, erstreckt, wobei die Änderung des Neigungswinkels θ durch unterschiedliche Längen der Hebelabschnitte (6b, 7b) der Schenkel (6, 7) bedingt ist, wobei bei einer Einstellung des Winkels α sich der zumindest eine erste Schenkel (6) um die dritte Drehachse (13) dreht und durch die mechanische Kopplung eine Drehung des zumindest einen zweiten Schenkels (7) um die vierte Drehachse (14) verursacht wird, **dadurch gekennzeichnet, dass** der zumindest eine zweite Schenkel (7) indirekt mit dem zumindest einen Trägerelement (3) verbunden ist, wobei der zumindest eine zweite Schenkel (7) über ein Beabstandungselement (33) mit dem Trägerelement (3) verbunden ist, wobei das Beabstandungselement (33) um eine Drehachse (12) relativ zu dem zumindest einen zweiten Schenkel (7) drehbar ist, wobei das Beabstandungselement (33) um eine weitere Drehachse (34) relativ zu dem Trägerelement (3) drehbar ist.

2. Vorrichtung (2) nach Anspruch 1,
**dadurch gekennzeichnet, dass**
die mechanische Kopplung ein Verbindungselement (19) umfasst, welches die Hebelabschnitte (6b, 7b) der Schenkel (6, 7) verbindet, wobei die Änderung des Neigungswinkels θ durch die unterschiedlichen Länge der Hebelabschnitte (6b, 7b) des zumindest einen ersten Schenkels und des zumindest einen zweiten Schenkels (7) bedingt ist oder die Änderung des Neigungswinkels θ durch die unterschiedlichen Länge der Hebelabschnitte (6b, 7b) des zumindest einen ersten Schenkels und des zumindest einen zweiten Schenkels (7) bedingt ist und durch eine Modifikation der Länge des Verbindungselements (19) verursacht ist, wobei der Hebelabschnitt (7b) des zumindest einen zweiten Schenkels (7) eine größere Länge aufweist als der Hebelabschnitt (6b) des zumindest einen ersten Schenkels (6).

3. Vorrichtung (2) nach Anspruch 1 oder 2,
**dadurch gekennzeichnet, dass**
bei einem Neigungswinkel θ größer als 0° ein vorderer Bereich (3b) des Trägerelements (3) entlang der Höhenrichtung Z nach oben geschwenkt ist, wobei bei einem Neigungswinkel θ kleiner als 0° ein vorderer Bereich (3b) des Trägerelements (3) entlang der Höhenrichtung Z nach unten geschwenkt ist.

4. Vorrichtung (2) nach Anspruch 1 oder 2,
**dadurch gekennzeichnet, dass**
eine Änderung des Winkels α eine Verlagerung des zumindest einen Trägerelements (3) entlang einer Höhenachse Z und zugleich entlang der Längsachse X sowie eine Änderung eines Neigungswinkels θ des Trägerelements (3) verursacht, wobei eine Änderung des Winkels α, welche eine Verlagerung des zumindest einen Trägerelements (3) entlang der Höhenachse Z nach unten verursacht, zugleich eine Verlagerung des zumindest einen Trägerelements (3) entlang der Längsachse X nach vorne und eine Änderung des Neigungswinkels θ in negativer Richtung, wobei eine Änderung des Winkels α, welche eine Verlagerung des zumindest einen Trägerelements (3) entlang der Höhenachse Z nach oben verursacht, zugleich eine Verlagerung des zumindest einen Trägerelements (3) entlang der Längsachse X nach hinten und eine Änderung des Neigungswinkels θ in positiver Richtung verursacht.

5. Vorrichtung (2) nach einem der vorhergehenden Ansprüche,
**dadurch gekennzeichnet, dass**
der zumindest eine erste Schenkel (6) entlang der Längsachse X mit dem zumindest einem zweiten Schenkel (7) mittels einer ersten Längsverbindung (9) verbunden ist, welche durch das zumindest eine Trägerelement (3) oder durch das Sitzteil (4) realisiert ist, wobei der zumindest eine erste Schenkel (6) und der zumindest eine zweite Schenkel (7) jeweils einen ersten Abschnitt (6a, 7a) und den Hebelabschnitt (6b, 7b) aufweisen, wobei der erste Abschnitt (6a, 7a) und der Hebelabschnitt (6b, 7b) einen Winkel β einschließen, wodurch der zumindest eine erste Schenkel (6) und der zumindest eine zweite Schenkel (7) im Wesentlichen L-förmig ausgestaltet sind, wobei zwischen dem ersten Abschnitt (6a, 7a) und dem Hebelabschnitt (6b, 6b) ein Knickbereich (6c, 7c) vorgesehen ist.

6. Vorrichtung (2) nach Anspruch 5,
**dadurch gekennzeichnet, dass**
der zumindest eine erste Schenkel (6) und der zumindest eine zweite Schenkel (7) um jeweils eine Drehachse (11, 12) relativ zu dem Trägerelement (3) drehbar gelagert sind, wobei in einem oberen Endbereich des ersten Abschnitts (6a) die Drehachse (11, 12) bezüglich der Drehung relativ zu dem Trägerelement (3) angeordnet ist, wobei die Drehachse (13, 14) bezüglich der Drehung relativ zu dem Sitzunterbau (5) in dem Knickbereich (6c, 7c) angeordnet ist.

7. Vorrichtung (2) nach Anspruch 1 oder 2,
**dadurch gekennzeichnet, dass**
das Verbindungselement (19) dazu geeignet und dafür vorgesehen ist, die modifizierte Länge zu halten, wobei das Verbindungselement (19) mittels einer Bedien- und Steuereinrichtung (38) ansteuerbar ist, wobei die Bedien- und Steuereinrichtung (38) eine Speichereinrichtung (39) umfasst, mittels welcher bestimmte Längenwerte des Verbindungselements (19) speicherbar sind, wobei die Länge des Verbindungselements (19) kontinuierlich einstellbar ist, wobei das Verbindungselement (19) eine blockierbare Gasfeder oder ein Stellelement ist, wobei das Stellelement ein Spindelhubgetriebe umfasst.

8. Vorrichtung (2) nach einem der Ansprüche 5 bis 6,
**dadurch gekennzeichnet, dass**
die Modifikation der Länge des Verbindungselements (19) eine Drehung des zumindest einen zweiten Schenkels (7) um zumindest die Drehachse (16) bezüglich einer Drehung relativ zu dem Verbindungselement (19) und um die Drehachse (14) bezüglich einer Drehung relativ zu dem Sitzunterbau (5) verursacht, wobei die Modifikation der Länge des Verbindungselements (19) keine Drehung des zumindest einen ersten Schenkels (6) verursacht.

9. Vorrichtung (2) nach einem der vorhergehenden Ansprüche,
**dadurch gekennzeichnet, dass**
der erste Abschnitt (6a) des zumindest einen ersten Schenkels (6) und der erste Abschnitt (7a) des zumindest einen zweiten Schenkels (7) eine gleiche Länge aufweisen, wobei die Drehachsen (11, 12) bezüglich der Drehung relativ zu dem Trägerelement (3) des zumindest einen ersten Schenkels (6) und des zumindest einen zweiten Schenkels (7) auf einer ersten fiktiven oder realen Verbindungslinie (17) liegen, wobei die Drehachsen (13, 14) bezüglich der Drehung relativ zu dem Sitzunterbau (5) des zumindest einen ersten Schenkels (6) und des zumindest einen zweiten Schenkels (7) auf einer zweiten fiktiven oder realen Verbindungslinie (18) liegen, wobei die erste Verbindungslinie (17), die zweite Verbindungslinie (18) und die ersten Abschnitte (6a, 7a) des zumindest einen ersten Schenkels (6) und des zumindest einen zweiten Schenkels (7) ein Trapez (21) bilden.

10. Vorrichtung (2) nach einem der vorhergehenden Ansprüche,
**dadurch gekennzeichnet, dass**
die Winkeleinstelleinrichtung (8) eine Feststelleinrichtung (25) umfasst, welche einen eingestellten Winkel α feststellt, wobei die Winkeleinstelleinrichtung (8) einen Antrieb (26) umfasst, mittels welchem die Feststelleinrichtung (25) angetrieben wird, um den Winkel α zu verändern.

11. Vorrichtung (2) nach einem der vorhergehenden Ansprüche,
**dadurch gekennzeichnet, dass**
zwei erste Schenkel (6) und zwei zweite Schenkel (7) vorgesehen sind, wobei die beiden ersten Schenkel (6) entlang der Breitenachse Y voneinander beabstandet sind und um die gleichen Drehachsen (11, 13,15) drehbar sind, wobei die beiden zweiten Schenkel (7) entlang der Breitenachse Y voneinander beabstandet und um die gleichen Drehachsen (12, 14, 16) drehbar sind, wobei die entlang der Breitenachse Y sich gegenüberliegenden Schenkel (6, 7) mittels zumindest einer Querverbindung (23) verbunden sind.

12. Vorrichtung (2) nach einem der vorhergehenden Ansprüche,
**dadurch gekennzeichnet, dass**
die Vorrichtung (2) ein modulares Bauelement ist.

13. Fahrzeugsitz (1) mit einer Vorrichtung (1) nach einem der vorhergehenden Ansprüche.

14. Fahrzeugsitz (1) nach Anspruch 13
**dadurch gekennzeichnet, dass**
der Fahrzeugsitz (1) ein Scherengestell (27) umfasst, mittels welchem der Fahrzeugsitz (1) an einem Karosserieboden (26) befestigt ist, wobei der Fahrzeugsitz (1) eine Feder und/oder Dämpfungseinrichtung (28) zur Federung/Dämpfung von vertikalen und/oder horizontalen Schwingungen umfasst.

## Claims

1. Device (2) for adjusting a seat position for a vehicle seat (1),
which comprises at least one support element (3) for a seat part (4) and can be connected to a seat base (5), wherein the device (2) comprises at least a first leg (6) and at least one second leg (7), wherein the first leg (6) is rotatable about a third axis of rotation (13) and the second leg (7) is rotatable about a fourth axis of rotation (14) on the seat base (5) and rotatable on the at least one support element (3) arrangeable, wherein a first angle α between the first leg (6) and the support element (3) can be adjusted by an angle adjustment device (8), wherein the at least one first leg (6) and the at least one second leg (7) each have a lever section (6b, 7b) which are mechanically coupled and wherein the at least one first leg (6) is arranged along a longitudinal axis (X) behind the at least one second leg (7), wherein a change in the angle α causes a displacement of the at least one support element (3) along a height axis Z and a change in an angle of inclination θ of the support element (3), wherein the angle of inclination θ extends between a centre axis (38) of the at least one support element (3) and a reference axis (39), which is substantially parallel to the longitudinal axis (X), wherein the change in the angle of inclination θ is caused by different lengths of the lever sections (6b, 7b) of the legs (6, 7), wherein when the angle α is adjusted, the at least one first leg (6) rotates about the third axis of rotation (13) and the mechanical coupling causes the at least one second leg (7) to rotate about the fourth axis of rotation (14),
**characterised in that**,
the at least one second leg (7) is indirectly connected to the at least one support element (3), wherein the at least one second leg (7) is connected to the support element (3) via a spacer element (33), wherein the spacer element (33) is rotatable about an axis of rotation (12) relative to the at least one second leg (7), wherein the spacer element (33) is rotatable about a further axis of rotation (34) relative to the support element (3).

2. Device (2) according to claim 1,
**characterised in that**
the mechanical coupling comprises a connecting element (19) which connects the lever sections (6b, 7b) of the legs (6, 7), wherein the change in the angle of inclination θ is caused by the different lengths of the lever sections (6b, 7b) of the at least one first leg (6) and of the at least one second leg (7) or the change in the angle of inclination θ is caused by the different lengths of the lever sections (6b, 7b) of the at least one first leg (6) and of the at least one second leg (7) and is caused by a modification of the length of the connecting element (19), wherein the lever section (7b) of the at least one second leg (7) has a greater length than the lever section (6b) of the at least one first leg (6).

3. Device (2) according to claim 1 or 2,
**characterised in that**
at an angle of inclination θ greater than 0°, a front region (3b) of the support element (3) is tilted upwards along the height direction Z, wherein at an angle of inclination θ less than 0°, a front region (3b) of the support element (3) is tilted downwards along the height direction Z.

4. Device (2) according to claim 1 or 2,
**characterised in that**
a change in the angle α causes a displacement of the at least one support element (3) along a vertical axis Z and simultaneously along the longitudinal axis X and a change in an angle of inclination θ of the support element (3), wherein a change in the angle α causes a downward displacement of the at least one support element (3) along the vertical axis Z, simultaneously causes a displacement of the at least one support element (3) along the longitudinal axis X forwards and a change in the angle of inclination θ in the negative direction, wherein a change in the angle α, which causes a displacement of the at least one support element (3) along the vertical axis Z upwards, simultaneously causes a displacement of the at least one support element (3) along the longitudinal axis X backwards and a change in the angle of inclination θ in the positive direction.

5. Device (2) according to one of the preceding claims,
**characterised in that**
the at least one first leg (6) is connected along the longitudinal axis X to the at least one second leg (7) by means of a first longitudinal connection (9), which is realised by the at least one support element (3) or by the seat part (4), wherein the at least one first leg (6) and the at least one second leg (7) each have a first section (6a, 7a) and the lever section (6b, 7b), wherein the first section (6a, 7a) and the lever section (6b, 7b) enclose an angle β, whereby the at least one first leg (6) and the at least one second leg (7) are essentially L-shaped, wherein a buckling region (6c, 7c) is provided between the first section (6a, 7a) and the lever section (6b, 6b).

6. Device (2) according to claim 5,
**characterised in that**
the at least one first leg (6) and the at least one second leg (7) are each mounted rotatably about an axis of rotation (11, 12) relative to the support element (3), wherein the axis of rotation (11, 12) is arranged in an upper end region of the first section (6a) with respect to the rotation relative to the support element (3), wherein the axis of rotation (13, 14) is arranged in the buckling region (6c, 7c) with respect to the rotation relative to the seat base (5).

7. Device (2) according to claim 1 or 2,
**characterised in that**
the connecting element (19) is suitable and intended for holding the modified length, wherein the connecting element (19) can be controlled by means of an operating and control device (38), wherein the operating and control device (38) comprises a storage device (39), by means of which certain length values of the connecting element (19) can be stored, wherein the length of the connecting element (19) can be continuously adjusted, wherein the connecting element (19) is a lockable gas spring or an actuating element, wherein the actuating element comprises a screw jack.

8. Device (2) according to one of claims 5 to 6,
**characterised in that**
the modification of the length of the connecting element (19) causes a rotation of the at least one second leg (7) about at least the axis of rotation (16) with respect to a rotation relative to the connecting element (19) and about the axis of rotation (14) with respect to a rotation relative to the seat base (5), wherein the modification of the length of the connecting element (19) does not cause a rotation of the at least one first leg (6).

9. Device (2) according to any of the preceding claims,
**characterised in that**
the first section (6a) of the at least one first leg (6) and the first section (7a) of the at least one second leg (7) have the same length, wherein the axes of rotation (11, 12) with respect to the rotation relative to the support element (3) of the at least one first leg (6) and of the at least one second leg (7) lie on a first fictitious or real connecting line (17), wherein the axes of rotation (13, 14) lie on a second fictitious or real connecting line (18) with respect to the rotation relative to the seat base (5) of the at least one first leg (6) and of the at least one second leg (7), wherein the first connecting line (17), the second connecting line (18) and the first sections (6a, 7a) of the at least one first leg (6) and of the at least one second leg (7) form a trapezium (21).

10. Device (2) according to one of the preceding claims,
**characterised in that**
the angle adjustment device (8) comprises a fixing device (25) which fixes a set angle α, wherein the angle adjustment device (8) comprises a drive (26) by means of which the fixing device (25) is driven in order to change the angle α.

11. Device (2) according to one of the preceding claims,
**characterised in that**
two first legs (6) and two second legs (7) are provided, wherein the two first legs (6) are spaced apart along the width axis Y and are rotatable about the same axes of rotation (11, 13, 15), wherein the two second legs (7) are spaced apart along the width axis Y and are rotatable about the same axes of rotation (12, 14, 16), wherein the legs (6, 7) lying opposite each other along the width axis Y are connected by means of at least one transverse connection (23).

12. Device (2) according to one of the preceding claims,
**characterised in that**
the device (2) is a modular component.

13. A vehicle seat (1) comprising a device (1) according to any one of the preceding claims.

14. Vehicle seat (1) according to claim 13
**characterised in that**
the vehicle seat (1) comprises a scissor frame (27), by means of which the vehicle seat (1) is fastened to a body floor (26), wherein the vehicle seat (1) comprises a spring and/or damping device (28) for springing/damping vertical and/or horizontal vibrations.

## Revendications

1. Dispositif (2) pour le réglage d'une position de siège pour un siège de véhicule (1), lequel dispositif comporte au moins un élément de support (3) pour une partie de siège (4) et est apte à être relié à une sous-structure de siège (5),
le dispositif (2) comportant au moins une première branche (6) et au moins une seconde branche (7), la première branche (6) pouvant être disposée de manière rotative autour d'un troisième axe de rotation (13) par rapport à la sous-structure de siège (5) et la seconde branche (7) pouvant être disposée de manière rotative autour d'un quatrième axe de rotation (14) par rapport à la sous-structure de siège (5) et lesdites branches pouvant être disposées de manière rotative par rapport audit au moins un élément de support (3), un premier angle α entre la première branche (6) et l'élément de support (3) étant réglable par un dispositif de réglage d'angle (8), ladite au moins une première branche (6) et ladite au moins une seconde branche (7) présentant respectivement une section de levier (6b, 7b), lesquelles sont couplées mécaniquement et ladite au moins une première branche (6) étant disposée le long d'un axe longitudinal (X) derrière ladite au moins une seconde branche (7), une modification de l'angle α provoquant un déplacement dudit au moins un élément de support (3) le long d'un axe de hauteur Z et une modification d'un angle d'inclinaison θ de l'élément de support (3), l'angle d'inclinaison θ s'étendant entre un axe central (38) dudit au moins un élément de support (3) et un axe de référence (39), lequel est sensiblement parallèle à l'axe longitudinal (X), la modification de l'angle d'inclinaison θ étant conditionnée par des longueurs différentes des sections de levier (6b, 7b) des branches (6, 7), où, lors d'un réglage de l'angle α, ladite au moins une première branche (6) tourne autour du troisième axe de rotation (13) et, par le couplage mécanique, une rotation de ladite au moins une seconde branche (7) autour du quatrième axe de rotation (14) est provoquée,
**caractérisé par le fait que** ladite au moins une seconde branche (7) est reliée indirectement audit au moins un élément de support (3), ladite au moins une seconde branche (7) étant reliée à l'élément de support (3) par un élément espaceur (33), l'élément espaceur (33) étant apte à tourner autour d'un axe de rotation (12) par rapport à ladite au moins une seconde branche (7), l'élément espaceur (33) étant apte à tourner autour d'un autre axe de rotation (34) par rapport à l'élément de support (3).

2. Dispositif (2) selon la revendication 1,
**caractérisé par le fait que**
le couplage mécanique comporte un élément de liaison (19) lequel relie les parties de levier (6b, 7b) des branches (6, 7), la modification de l'angle d'inclinaison θ étant provoquée par la longueur différente des sections de levier (6b, 7b) de ladite au moins une première branche et de ladite au moins une seconde branche (7) ou la modification de l'angle d'inclinaison θ étant conditionnée par la longueur différente des sections de levier (6b, 7b) de ladite au moins une première branche et de ladite au moins une seconde branche (7) et étant provoquée par une modification de la longueur de l'élément de liaison (19), la section de levier (7b) de ladite au moins une seconde branche (7) présentant une longueur supérieure à la section de levier (6b) de ladite au moins une première branche (6).

3. Dispositif (2) selon l'une des revendications 1 ou 2,
**caractérisé par le fait que**
pour un angle d'inclinaison θ supérieur à 0°, une zone avant (3b) de l'élément de support (3) est pivotée vers le haut le long de la direction de hauteur Z, où, pour un angle d'inclinaison θ inférieur à 0°, une zone avant (3b) de l'élément de support (3) est pivotée vers le bas le long de la direction de hauteur Z.

4. Dispositif (2) selon l'une des revendications 1 ou 2,
**caractérisé par le fait qu'**
une modification de l'angle α provoque un déplacement dudit au moins un élément de support (3) le long d'un axe de hauteur Z et en même temps le long de l'axe longitudinal X ainsi qu'une modification d'un angle d'inclinaison θ de l'élément de support (3), où une modification de l'angle α qui provoque un déplacement dudit au moins un élément de support (3) vers le bas le long de l'axe de hauteur Z également, en même temps, provoque un déplacement dudit au moins un élément de support (3) vers l'avant le long de l'axe longitudinal X et une modification de l'angle d'inclinaison θ dans le sens négatif, où une modification de l'angle α qui provoque un déplacement dudit au moins un élément de support (3) vers le haut le long de l'axe de hauteur Z également, en même temps, provoque un déplacement dudit au moins un élément de support (3) vers l'arrière le long de l'axe longitudinal X et une modification de l'angle d'inclinaison θ dans le sens positif.

5. Dispositif (2) selon l'une des revendications précédentes,
**caractérisé par le fait que**
ladite au moins une première branche (6) le long de l'axe longitudinal X est reliée avec ladite au moins une seconde branche (7) au moyen d'une première liaison longitudinale (9), laquelle est réalisée par ledit au moins un élément de support (3) ou par la partie siège (4), ladite au moins une première branche (6) et ladite au moins une seconde branche (7) présentant chacune une première section (6a, 7a) et la section de levier (6b, 7b), la première section (6a, 7a) et la section de levier (6b, 7b) formant un angle β, ce par quoi ladite au moins une première branche (6) et ladite au moins une seconde branche (7) sont configurées sensiblement en forme de L, une zone de pliage (6c, 7c) étant prévue entre la première section (6a, 7a) et la section de levier (6b, 6b).

6. Dispositif (2) selon la revendication 5,
**caractérisé par le fait que**
ladite au moins une première branche (6) et ladite au moins une seconde branche (7) sont montées de manière à pouvoir tourner autour d'un axe de rotation respectif (11, 12) par rapport à l'élément de support (3), l'axe de rotation (11, 12) en ce qui concerne la rotation par rapport à l'élément de support (3) étant disposé dans une zone d'extrémité supérieure de la première partie (6a), l'axe de rotation (13, 14) en ce qui concerne la rotation par rapport à la sous-structure de siège (5) étant disposé dans la zone de pliage (6c, 7c).

7. Dispositif (2) selon l'une des revendications 1 ou 2,
**caractérisé par le fait que**
l'élément de liaison (19) est adapté et prévu pour maintenir la longueur modifiée, l'élément de liaison (19) étant apte à être commandé au moyen d'un dispositif de commande et de contrôle (38), le dispositif de commande et de contrôle (38) comportant un dispositif de mémoire (39) au moyen duquel des valeurs de longueur définies de l'élément de liaison (19) sont mémorisables, la longueur de l'élément de liaison (19) étant réglable en continu, l'élément de liaison (19) étant un ressort à gaz pouvant être bloqué ou un élément de réglage, l'élément de réglage comportant un vérin mécanique.

8. Dispositif (2) selon l'une des revendications 5 et 6,
**caractérisé par le fait que**
la modification de la longueur de l'élément de liaison (19) provoque une rotation de ladite au moins une seconde branche (7) autour d'au moins l'axe de rotation (16) en ce qui concerne une rotation par rapport à l'élément de liaison (19) et autour de l'axe de rotation (14) en ce qui concerne une rotation par rapport à la sous-structure de siège (5), la modification de la longueur de l'élément de liaison (19) ne provoquant pas de rotation de ladite au moins une première branche (6).

9. Dispositif (2) selon l'une des revendications précédentes,
**caractérisé par le fait que**
la première partie (6a) de ladite au moins une première branche (6) et la première partie (7a) de ladite au moins une seconde branche (7) présentent une même longueur, les axes de rotation (11, 12) en ce qui concerne la rotation par rapport à l'élément de support (3) de ladite au moins une première branche (6) et de ladite au moins une seconde branche (7) étant situés sur une première ligne de liaison (17) fictive ou réelle, les axes de rotation (13, 14) en ce qui concerne la rotation par rapport à la sous-structure de siège (5) de ladite au moins une première branche (6) et de ladite au moins une seconde branche (7) se trouvant sur une seconde ligne de liaison (18) fictive ou réelle, la première ligne de liaison (17), la seconde ligne de liaison (18) et les premières sections (6a, 7a) de ladite au moins une première branche (6) et de ladite au moins une seconde branche (7) formant un trapèze (21).

10. Dispositif (2) selon l'une des revendications précedentes,
**caractérisé par le fait que**
le dispositif de réglage d'angle (8) comporte un dispositif de blocage (25), lequel bloque un angle réglé α, le dispositif de réglage d'angle (8) comportant un entraînement (26) au moyen duquel le dispositif de blocage (25) est entraîné afin de modifier l'angle α.

11. Dispositif (2) selon l'une des revendications précédentes,
**caractérisé par le fait que**
deux premières branches (6) et deux secondes branches (7) sont prévues, les deux premières branches (6) étant espacées l'une de l'autre le long de l'axe de largeur Y et étant aptes à tourner autour des mêmes axes de rotation (11, 13, 15), les deux secondes branches (7) étant espacées l'une de l'autre le long de l'axe de largeur Y et étant aptes à tourner autour des mêmes axes de rotation (12, 14, 16), les branches (6, 7) opposées l'une à l'autre le long de l'axe de largeur Y étant reliées au moyen d'au moins une liaison transversale (23).

12. Dispositif (2) selon l'une des revendications précédentes,
**caractérisé par le fait que**
le dispositif (2) est un composant modulaire.

13. Siège de véhicule (1) comportant un dispositif (1) selon l'une des revendications précédentes.

14. Siège de véhicule (1) selon la revendication 13,
**caractérisé par le fait que**
le siège de véhicule (1) comporte un châssis à ciseaux (27) au moyen duquel le siège de véhicule (1) est fixé à un plancher de carrosserie (26), le siège de véhicule (1) comportant un dispositif de suspsension et/ou d'amortissement (28) pour la suspension/l'amortissement de vibrations verticales et/ou horizontales.
